(19) Europäisches Patentamt
European Patent Office
Office européen des brevets

(11) **EP 3 254 425 B1**

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(51) Int Cl.:
***H04L 27/26*** *(2006.01)*

(21) Anmeldenummer: **16702882.8**

(22) Anmeldetag: **30.01.2016**

(86) Internationale Anmeldenummer:
**PCT/EP2016/025004**

(87) Internationale Veröffentlichungsnummer:
**WO 2016/120020 (04.08.2016 Gazette 2016/31)**

(54) **VERFAHREN ZUR FREQUENZ- UND ZEITSELEKTIVEN INTERFERENZUNTERDRÜCKUNG FÜR EIN KOMMUNIKATIONSSYSTEM BASIEREND AUF OFDM UND EMPFÄNGER HIERFÜR**

METHOD FOR A FREQUENCY AND TIME SELECTIVE INTERFERENCE REDUCTION FOR AN OFDM COMMUNICATION SYSTEM AND RECEIVER THEREFOR

PROCÉDÉ POUR UNE RÉDUCTION D'INTERFÉRENCE SÉLECTIVE EN FRÉQUENCE ET DANS LE TEMPS POUR UN SYSTÈME DE COMMUNICATION OFDM ET RÉCEPTEUR CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.02.2015 DE 102015001106**

(43) Veröffentlichungstag der Anmeldung:
**13.12.2017 Patentblatt 2017/50**

(73) Patentinhaber: **iAd Gesellschaft für Informatik, Automatisierung und Datenverarbeitung mbH 90613 Grosshabersdorf (DE)**

(72) Erfinder:
• **HAMPEL, Hermann 90613 Grosshabersdorf (DE)**
• **BEROLD, Ulrich 90427 Nürnberg (DE)**
• **HIRSCHBECK, Martin 90419 Nürnberg (DE)**

(74) Vertreter: **Dreykorn-Lindner, Werner et al Patentanwalt Steinlachstrasse 2 90571 Schwaig (DE)**

(56) Entgegenhaltungen:
DE-A1-102010 056 087

• **Q. ZHANG; Y. ZHENG; S. WILSON: "Excision of Distance Measuring Equipment Interference from Radio Astronomy Signals", THE ASTRONOMIC J JOURNAL, 2005, Seiten 2933-2939, XP002756305, in der Anmeldung erwähnt**
• **WANG WEI ET AL: "A New Narrowband Interference Mitigation Algorithm Based on Adaptive Wavelet Packet Decomposition", 2014 FOURTH INTERNATIONAL CONFERENCE ON INSTRUMENTATION AND MEASUREMENT, COMPUTER, COMMUNICATION AND CONTROL, IEEE, 18. September 2014 (2014-09-18), Seiten 6-11, XP032714971, DOI: 10.1109/IMCCC.2014.10 [gefunden am 2014-12-22]**
• **SCHNELL M ET AL: "Interference mitigation for broadband L-DACS", DIGITAL AVIONICS SYSTEMS CONFERENCE, 2008. DASC 2008. IEEE/AIAA 27TH, IEEE, PISCATAWAY, NJ, USA, 26. Oktober 2008 (2008-10-26), Seiten 2.B.2-1, XP031372558, ISBN: 978-1-4244-2207-4**

**Beschreibung**

Die Erfindung betrifft, gemäß den Patentansprüchen 1 und 3 ein Verfahren zur frequenz- und zeitselektiven Interferenzunterdrückung für ein Kommunikationssystem, basierend auf OFDM. Weiterhin betrifft die Erfindung gemäß Patentanspruch 5 einen Empfänger hierfür. Der Flugverkehr nimmt auf der ganzen Welt rasant zu, verbunden mit einem erhöhten Bedarf an Flugkommunikation. Die Kommunikation zwischen Flugsicherung und Flugzeugpiloten wird momentan durch AM-basierte Kommunikationssysteme im VHF-Band abgedeckt. Leider ist die Kapazität dieses Systems limitiert, so dass andere Lösungen diskutiert werden, um dieses Problem in Zukunft zu lösen. L-band Digital Aeronautical Communication System 1 (L-DACS1) ist ein Kandidat für diese Aufgabe. Es soll im Flugfunk-Bereich des L-Bandes (960-1164 MHz) operieren und basiert auf orthogonales Frequenzmultiplexverfahren (OFDM). Dort soll es als Zwischensystem zwischen zwei Distance Measuring Equipment (DME)-Kanälen eingesetzt werden. Da das L-Band von anderen Flugfunk-Systemen genutzt wird, ist L-DACS 1 als Zwischensystem zwischen Frequenzbändern geplant, welche für das impulsförmige Distance Measuring Equipment (DME) reserviert sind. Natürlich stören sich beide Systeme gegenseitig, so dass Maßnahmen getroffen werden müssen, um mit der Interferenz von DME, das sind impulsartige Gaußimpulse, welche im Frequenzspektrum nur 0,5 MHz, 1,5 MHz, etc. von der LDACS1-Mittenfrequenz entfernt sind und welche zur Ermittlung der Positionen von Flugzeugen dienen, umzugehen. Nachfolgend wird das L-DACS1-System gemäß dem Stand der Technik beschrieben. Wie beispielsweise der Veröffentlichung von M. Sajatovic, B. Haindl, U. Epple, T. Gräupl, "Updated LDACS1 System Specification", Doc. ref. EWA04-1-T2-D1, 2011 zu entnehmen ist, weist das L-DACS1-System einen Forward Link (FL) und einen Reverse Link (RL) auf. FL entspricht der Verbindung von der Bodenstation (GS) zum Flugzeug (AS), für RL genau umgekehrt. Die DME-Bodenstationen mit benachbarten DME-Frequenzkanälen müssen mindestens 45 nm (Nautische Meile) entfernt voneinander liegen, der übernächste Frequenzkanal mit 2 MHz Abstand muss mindestens 10 nm Abstand haben. Jeder Link nutzt eine Gesamtbandbreite von ungefähr 500 kHz, welche sich aufteilt in 50 Subträgern mit einem Subträgerabstand von 9,8 kHz. Die Länge eines OFDM-Symbols ist 120 μs, der nutzbare Teil beträgt 102,4 μs.

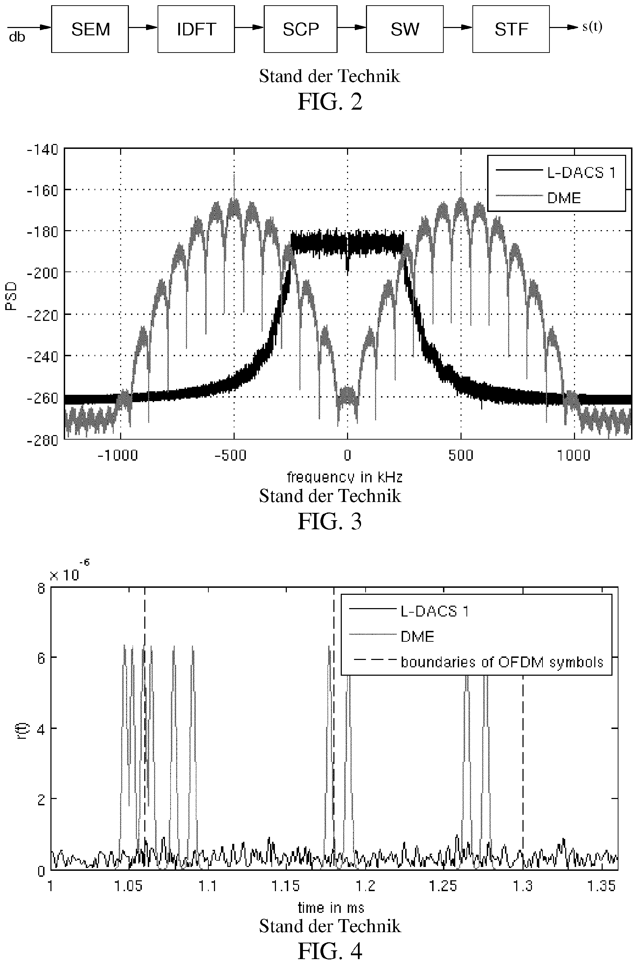

FIG. 2 zeigt das Blockschaltbild des Senders (physikalische Schicht, Bitübertragungsschicht) beim Stand der Technik. Die von einer Datenquelle zugeführten Binärsymbole db werden in einem Modul SEM mit Reed-Solomon- und Faltungscodierung codiert und als Modulation wird QPSK, 16- oder 64QAM benutzt, was in eine Gesamtrate von 0,9 - 4,08 bit/QAM Symbol resultiert. Die modulierten Symbole, die Synchronisations- und Pilotsymbole werden auf eine OFDM Rahmen-Struktur abgebildet. Die Sendesymbole eines Rahmens werden mit $S_{l,k}$ gekennzeichnet, wobei l und k für den Zeitindex eines OFDM-Symbols und den Subträgerindex stehen. Sieben Nullträger liegen auf den niedrigen Frequenzen (k = {-32, ..., -26}) und sechs auf den hohen Frequenzen (k = {26, ...,-31}). Ein weiterer Nullträger befindet sich auf der Trägerfrequenz, d.h. auf dem Gleichanteil im äquivalenten komplexen Basisband ECB. Eine inverse diskrete Fourier-Transformation IDFT (siehe Modul IDFT) der Größe 64 wird verwendet, um die Subträgerwerte des l-ten OFDM-Symbols in den Zeitbereich zu transformieren. Das zeitdiskrete ECB-Signal lautet dann:

$$s_l[n] = \frac{1}{\sqrt{64}} \sum_{k=-32}^{31} S_{l,k} \cdot e^{j2\pi \frac{k \cdot n}{64}}.$$

(1)

wobei n für den Abtastzeitpunkt steht mit n ∈ {0, ..., 63}. Ein Cyclic Prefix (siehe Modul SCP) wird hinzugefügt, um die lineare Faltung in eine zyklische zu umzuwandeln, wie dies in K. Kammayer, Nachrichtenübertragung, 4th edition, Wiesbaden, Germany: Vieweg + Teubner, 2011 beschrieben ist. Um die Interferenz auf benachbarte Systeme im Frequenzbereich zu reduzieren, wird jedes OFDM-Symbol mit einem Raised-Cosine-Fenster im Zeitbereich gefenstert (siehe Modul SW). Ein Sendefilter (siehe Modul STF) bildet schließlich das zeitkontinuierliche Sendesignal s(t).

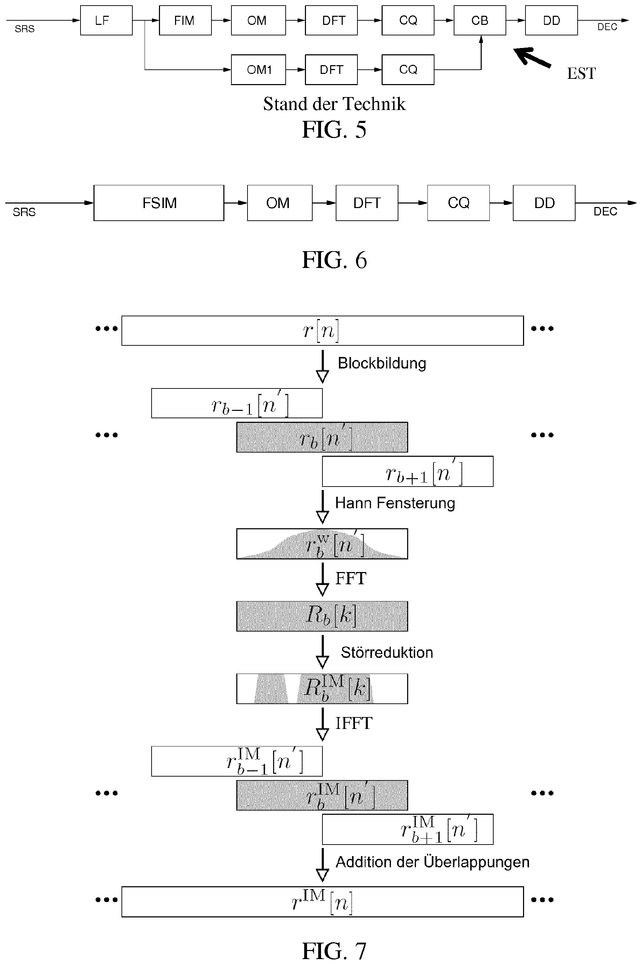

Die L-DACS 1 FL/RL Kanalfrequenzen liegen im Bereich von 985,5MHz bis 1008,5MHz, bzw. von 1048,5MHz bis 1071,5MHz. Der Kanalabstand beträgt 1MHz. Zwischen zwei L-DACS1-Kanälen sind die DME-Kanäle verteilt. In den FIG. 3 und FIG. 4 wird der gleichzeitige Empfang von DME- und L-DACS1-Signalen exemplarisch in Frequenz- und Zeitbereich beim Stand der Technik gezeigt. Die spektrale Leistung von DME fällt sehr schnell mit wachsendem Frequenzabstand ab. Daher ist davon auszugehen, dass nach dem Empfangsfilter (siehe FIG. 5, Tiefpassfilter LF) nur noch zwei DME-Kanäle auf den Trägerfrequenzen ±0,5MHz übrig bleiben. Das DME-System wird verwendet, um die Positionen von Flugzeugen zu bestimmen und besteht auch aus Boden- und Flugstation. Boden- und Flugstation arbeiten als Abfrageeinheit (interrogator) und Transponder. Eine DME-Bodenstation sendet mit einer festen Spitzensendeleistung und einer festen Duty-Cycle. Die Spitzensendeleistung beträgt 30 dBW bei einer DME-Bodenstation, im Einzelnen siehe hierzu U. Epple, M. Schnell, "Overview of interference situation and mitigation techniques for LDACS1", Digital Avionics Systems Conference (DASC), pp. 4C5-1 - 4C5-12, 2011 oder S. Brandes, S. Gligorevic, M. Ehammer, T. Gräupl, R. Dittrich, "Expected B-AMC System Performance", Doc. ref. CIEA15EN506.11, 2007 oder M. Sajatovic, B. Haindl, U. Epple, T. Gräupl, "Updated LDACS1 System Specification" a.a.O. Die Duty Cylce einer Bodenstation beträgt 2700 Pulspaare pro Sekunde (ppps) einer regulären DME-Station und 3600 ppps einer Tactical Air Navigation (TACAN)-Station. Die Flugzeuge von DME und TACAN senden mit einer Spitzensendeleistung von 33 dBW und 34,8 dBW. Nachfolgend wird die höchst mögliche TACAN Pulse-Amplitude angenommen. Die Duty-Cycle für die Anregung ist 150 ppps im Such- und 30 ppps im Nachführungsmodus. Das DME-Zeitsignal wird im äquivalenten komplexen Basisband (ECB) als zwei Gaußförmige Impulse definiert:

$$i^{\mathrm{DME}}(t) = \left( e^{-\pi\left(\frac{t-t_0}{\Delta t}\right)^2} + e^{-\pi\left(\frac{t-t_0-\Delta\tau}{\Delta t}\right)^2} \right) e^{j2\pi(\pm 0.5\,\mathrm{MHz})t} \tag{2}$$

wobei $\Delta t = 3{,}7367\ \mu s$ und $\Delta\tau = 12\ \mu s$ die DME (mode X) System-Parameter sind. Der Zeitversatz $t_0$ relativ zum OFDM-Rahmen ist am L-DACS 1-Empfänger unbekannt. Die Trägerfrequenzen von L-DACS 1 und den am schlimmsten interferierenden DME-Kanälen haben einen Frequenzabstand von $\pm 0{,}5$MHz.

Am L-DACS 1 Empfänger EST (siehe FIG. 5) nach Stand der Technik wird als Kanalmodell ein Luftfahrtkanal en-route angenommen, bei dem ein Flugzeug mit einer Geschwindigkeit von 1.111,3 km/h in Richtung Bodenstation fliegt. Dies führt zu einer Dopplerfrequenz von +1.103Hz bei einer Trägerfrequenz von 1.072MHz. Zwei Echopfade entstehen zusätzlich mit Verzögerungen von 0,3 $\mu s$ und 15 $\mu s$ und Dämpfungen von 22 dB und 16 dB und Doppler-Verschiebungen von +937,7Hz und -662Hz. Dies ist ein Worst-Case-Szenario hinsichtlich Doppler-Verbreiterung. Nimmt man nun einen Funkkanal an, bei dem das Flugzeug in der Luft mit konstanter Geschwindigkeit fliegt, so gibt es eine starke Komponente mit direkter Sichtverbindung. Dies kann als Modell mit additiven weißen Gaußförmigen Rauschen (AWGN) modelliert werden, wenn perfekte Kanalschätzung und -entzerrung angenommen wird. Empfängerseitig (Eingangssignal SRS) ist das abgetastete Empfangssignal $r_l[n]$ eines OFDM-Symbols l nach der OFDM-Fensterung:

$$r_l[n] = s_l[n] * h_l[n] + n_l^{\mathrm{AWGN}}[n] + i_l^{\mathrm{DME}}[n]. \tag{3}$$

mit Zeitindex n, mit $h_l[n]$ als die Kanalgewichtsfunktion, mit $n_l^{\mathrm{AWGN}}[n]$ als das additive weiße Gaußsche Rauschen (mittelwertfrei und Varianz $\sigma_n^2$) und $i_l^{\mathrm{DME}}[n]$ als das DME-Interferenzsignal eines OFDM-Symbol l, d.h. für das gefilterte und abgetastete DME-Signal steht. Danach wird die DFT (siehe FIG. 5, im Modul DFT) auf das abgetastete Empfangssignal angewandt, wobei das Ausgangssignal der diskreten Fourier-Transformation (DFT) auf dem Subträgerindex k und dem OFDM-Symbol l lautet:

$$R_{l,k} = H_{l,k} \cdot S_{l,k} + N_{l,k} + I_{l,k}^{\mathrm{DME}} \tag{4}$$

mit $S_{l,k}$ für die DFT des L-DACS1-Signals, mit $H_{l,k}$ für den Kanal, mit $N_{l,k}$ für das Rauschen und mit $I_{l,k}^{\mathrm{DME}}$ für die DME-Störung (-Interferenz). Um Effekte einer ungenauen Kanalschätzung auszuschließen, wird von einer perfekten Synchronisation zu Zeit- und Frequenzoffsets und perfekte Kanalentzerrung (FIG. 5, FIG. 6: Modul zur Kanalentzerrung CQ) ausgegangen. Schließlich werden die Daten demoduliert und decodiert (siehe FIG. 5, 6, im Modul DD und Ausgangssignal DEC), um eine Schätzung der gesendeten Bits zu erhalten.

Zur Unterdrückung von impulsförmigen Interferenzen sind verschiedene Pulse-Blanking-Ansätze bekannt, welche für den Einsatz von DME-Unterdrückung in einem L-DACS1-Empfänger benutzt werden können. DME-Unterdrückung (FIG. 5 im Modul FIM, FIG. 6 im Modul FSIM) sollte vor der OFDM-Fensterung (FIG. 5, FIG. 6 im Modul OM) angewandt werden. Wenn ein DME-Impuls direkt auf der Flanke des rechteckförmigen OFDM-Fensters im Zeitbereich liegt, so geht die spektrale Form des DME-Signals verloren, und L-DACS1-Frequenzen sind betroffen. Wegen dem frequenzselektiven Charakter von DME sollte die Unterdrückung frequenzselektiv realisiert werden.

Beispielsweise ist aus der DE 10 2008 032 913 A1 ein Verfahren zur Kompensation von durch Ausblendung pulsförmiger Störeinflüsse erzeugten Informationsverlusten in einem von einem Empfänger empfangenen Kommunikationssignal bekannt, wobei dieses Kompensationsverfahrens bei Kommunikationssignalen in der Luftfahrt, und zwar bei OFDM-basierten Systemen angewandt wird. Der Stand der Technik umfasst Techniken, die Pulsstörer in Kommunikations- oder Navigationssystemen abschwächen. Dazu werden im Wesentlichen die Techniken Pulsausblendung (pulse blanking) und Amplitudenbegrenzung (clipping) bzw. Kombinationen aus beiden Techniken verwendet, siehe beispielsweise Sergey V. Zhidkov, "Analysis and Comparison of Several Simple Impulsive Noise Mitigation Schemes for OFDM Receivers," IEEE Transactions of Communications, vol. 56, no. 1, pp. 5-9, January 2008 oder Grace Xingxin Gao, "DME/TACAN Interference and its Mitigation in L5/E5 Bands," in ION Institute of Navigation Global Navigation Satellite Systems Conference, 2007. Sowohl beim "pulse blanking" als auch beim "clipping" wird der Einfluss der pulsförmigen Interferenz erheblich reduziert, so dass sich die Leistungsfähigkeit des OFDM-Systems insgesamt verbessert. Es wird allerdings nicht nur das Interferenzsignal, sondern auch das gewünschte OFDM-Signal beeinflusst, was mit Einbußen in der Leistungsfähigkeit verbunden ist, die den Gewinn durch "pulse blanking" oder "clipping" deutlich reduzieren. Um die durch die Ausblendung pulsförmiger Störeinflüsse erzeugten Informationsverluste in einem von einem Empfänger empfangenen Kommunikationssignal zu kompensieren, empfängt der Empfänger ein moduliertes OFDM-basiertes Signal mit pulsförmigen Störsignalen (Störimpulse), das eine Überlagerung aus einer Sequenz aus einer vorgegebenen Anzahl von Trägerfrequenzsignalen aufweist, deren Frequenzen sich um einen konstanten Betrag voneinander unterscheiden und die bei Frequenzen der jeweils anderen Trägerfrequenzsignale im wesentlichen keine Signalanteile aufweisen. Die pulsförmigen Störsignale werden durch eine Pulsausblendung eliminiert, indem die Störimpulse zunächst detektiert werden und anschließend das modulierte Signal im Empfänger an den von der pulsförmigen Interferenz betroffenen Stellen zu null gesetzt wird. Das so erhaltene Signal, im Frequenzbereich dargestellt, zeichnet sich dadurch aus, dass sich die Signalanteile bei jeder Trägerfrequenz aus einer Überlagerung von bestimmbaren Signalanteilen jeweils sämtlicher anderer Trägerfrequenzsignale ergeben. Von dem jeweiligen Signalanteil werden bei einer Trägerfrequenz diejenigen bestimmbaren Signalanteile subtrahiert, die sich aus den Trägerfrequenzsignalen sämtlicher anderer Trägerfrequenzen ergeben, und es werden die durch die Ausblendung der pulsförmigen Störeinflüsse erzeugten Informationsverluste kompensiert (und gegebenenfalls das kompensierte Signal im Empfänger detektiert und dekodiert). Da bei diesem in der DE 10 2008 032 913 A1 vorgeschlagenen Verfahren (das in der Lage ist, den Einfluss von "pulse blanking" in OFDM-basierten Kommunikationssystemen rückgängig zu machen) spezielle charakteristische Eigenschaften von OFDM-Signalen ausgenutzt werden, ist eine solche Kompensation nur in OFDM-basierten Kommunikationssystemen möglich und dieses Verfahren nur in OFDM-basierten Kommunikationssystemen anwendbar.

Bei einem als Erasure Decoding bezeichneten Verfahren (siehe M. Schnell, S. Brandes, S. Gligorevic, German Aerospace Center (DLR), 82234 Wessling, Germany M. Walter, "Interference Mitigation for Broadband L-DACS", 27th Digital Avionics Systems Conference (DASC) 2008) wird zuerst die Leistung der Störung auf jedem Subträger (d.h. nachdem das Signal mit Hilfe der diskreten Fouriertransformation (DFT) in den Frequenzbereich transfomiert wurde) geschätzt. Anschließend werden die Daten der Subträger, an denen eine Störung angenommen wird, als unzuverlässig eingestuft. Dazu muss die Störung vorher geschätzt werden. Dabei sinkt die Bitfehlerrate nach der Decodierung.

Demnach betrifft das Erasure Decoding Verfahren die Verringerung der Störeinflüsse von pulsförmigen Störsignalen bei einer OFDM-basierten Datenübertragung, mit dem Schritt des Multiplizierens eines Übertragungssignals, das ein Mehrträgerfrequenzsignal mit einzelnen Trägerfrequenzen zugeordneten modulierten Daten aufweist, mit einer Fensterfunktion zur Ausblendung eines pulsförmigen Störsignals im Übertragungssignal. Dabei ist die Fensterfunktion - im Zeitbereich als kontinuierliche Funktion betrachtet - differenzierbar und das mit der Fensterfunktion multiplizierte Übertragungssignal wird nach einer Übertragungskanalschätzung und Signalentzerrung dekodiert. Bei der Übertragungskanalschätzung der Daten, die den einzelnen Trägerfrequenzen jeweils zugeordnet sind, wird ein Zuverlässigkeitswert zugeordnet, der beschreibt, wie glaubwürdig die empfangenen oder geschätzten Daten sind. Schließlich wird der Zuverlässigkeitswert für diejenigen Daten, die den von einem pulsförmigen Störsignal betroffenen Trägerfrequenzen zugeordnet sind, vor der Dekodierung jeweils auf null gesetzt.

In Weiterbildung des Erasure Decoding Verfahrens wird in der DE 10 2010 056 087 A1 vorgeschlagen, dass die Fensterfunktion aus einer im Zeitbereich die Breite $T_0$ aufweisenden und im Frequenzbereich durch ein Spektrum mit einer Mittenfrequenz und spektralen Koeffizienten definierten Rechteckfensterfunktion realisiert wird. Diese Rechteckfensterfunktion wird entweder durch eine Filterung des Spektrums mittels eines Filters mit einer Bandbreite, die das 8-Fache oder das 16-Fache von $1/T_0$ beträgt, realisiert. Alternativ durch die Reduktion des Spektrums auf die K wertmäßig größten spektralen Koeffizienten oder auf diejenigen K spektralen Koeffizienten, deren zugehörige Frequenzen nächstliegend zur Mittenfrequenz des Spektrums sind, wobei der Parameter K gleich 8 oder 16 gewählt wird. Dadurch wird eine Verbreiterung des Störsignals im Frequenzbereich und damit eine Erhöhung der Anzahl der von der Interferenz betroffenen Symbole vermieden. Im Einzelnen wird das pulsförmige Störsignal im Übertragungssignal durch die Multiplikation des Übertragungssignals mit der Fensterfunktion ausgeblendet, indem die Fensterfunktion das pulsförmige Störsignal auf null oder auf Werte ungleich null herabsetzt wird. Die Multiplikation erfolgt digital, wobei die Fensterfunktion in Form diskreter Werte zu vorgegebenen Abtastzeitpunkten vorliegt und das Nutzsignal abgetastet sowie die Nutzsignal-Abtastwerte mit den Werten zu den zeitlich entsprechenden Abtastzeitpunkten der Fensterfunktion multipliziert werden. Für die Ausblendung des Pulsstörers wird nicht, wie im Stand der Technik üblich, ein Rechteckfenster verwendet, sondern eine Fensterform, die günstigere spektrale Eigenschaften hat. Insbesondere erfolgt die Auswahl der Fensterform dahingehend, dass die Störleistung möglichst wenig im Frequenzbereich verschmiert wird. Dies gelingt mit Fensterformen, die entweder ein frequenzbegrenztes Spektrum besitzen oder deren Spektrum schnell abklingt. Durch Anwendung einer Fensterform mit günstigen spektralen Eigenschaften, wie oben beschrieben, bleibt der wesentliche Einfluss eines Pulsstörers auf einen Teil der Subträger begrenzt. Ein Entzerrer zur Verringerung der durch Pulsausblendung eingebrachten Störung in das empfangene Nutzsignal weist eine geringere Komplexität auf, da er zur Entzerrung weniger gestörte Subträger berücksichtigen muss. Im Gegensatz dazu müsste ein Entzerrer zur Verringerung der durch Pulsausblendung gemäß dem Stand der Technik (Rechteckfenster) verursachten Störungen alle Subträger berücksichtigen. Weiterhin wird anstelle der rechteckigen Pulsausbildung eine weiche Pulsausblendung verwendet, um eine Verschmierung der Störleistung des Pulsstörers über die gesamte Nutzsignalbandbreite zu verhindern. Der Einfluss des Pulsstörers bleibt so auf einen Teil der Subträger begrenzt. Bei Pulsausblendung gemäß dem Stand der Technik (Rechteckfenster) werden alle Subträger des Nutzsignals gestört. Dadurch ergibt sich eine deutliche Reduktion des Signal-Stör-Verhältnisses auf allen Subträgern, die sich auf die Dekodierungsperformanz negativ auswirkt. Dagegen bleibt - im in der DE 10 2010 056 087 A1 vorgestellten Verfahren - die durch Pulsausblendung eingebrachte Störung auf einen Teil der Subträger begrenzt. Die restlichen Subträger weisen ein nahezu unverändertes Signal-Stör-Verhältnis auf. Somit lässt sich dieses Verfahren vorteilhaft mit "Erasure"-Dekodierung kombinieren. Die Begrenzung der Störleistung auf einen Teil der Subträger erlaubt, die Modulationssymbole der gestörten Subträger als "Erasures" zu deklarieren und anschließend eine "Erasure"-Dekodierung durchzuführen. Die Kombination von weichem Pulse Blanking PB mit "Erasure"-Dekodierung erzielt eine deutlich bessere Systemperformanz als rechteckige Pulsausblendung.

In M. Schnell, S. Brandes, S. Gligorevic, German Aerospace Center (DLR), 82234 Wessling, Germany M. Walter, "Interference Mitigation for Broadband L-DACS" a.a.O. wird Pulse-Blanking in einem OFDM-System mit Hilfe von Power Detection beschrieben. Dabei werden Abtastwerte zu Null gesetzt, deren Empfangspegel einen bestimmten Schwellwert überschreitet. Hierbei entstehen unerwünschte Inter-Carrier-Interferenzen (ICI), d.h. ein Übersprechen von Subträgern.

Zur Anpassung eines OFDM-Systems an Blanking-Nichtlinearitäten wird in U. Epple, K. Shibli, M. Schnell, "Investigation of Blanking Nonlinearity in OFDM Systems", International Conference on Communications (ICC), 2011 analysiert, welche Auswirkungen Pulse Blanking im OFDM-System auf das Nutzsignal und das Signal-zu-Stör-Verhältnisse auf jedem Subträger hat. Dabei wurde vereinfacht angenommen, dass die Positionen, an denen das Empfangssignal zu null gesetzt wird (d.h. geblankt wird), zufällig verteilt sind. Dies ist allerdings bei DME und L-DACS nicht der Fall, da ein DME-Impuls über mehrere L-DACS-Abtastwerte anhält.) Der Einfluss von Blanking auf das Nutzsignal wird in diesem Verfahren kompensiert. Außerdem wird der Einfluss auf das Signal-zu-Stör-Verhältnisse für die Kanalschätzung und -decodierung geschätzt und dort ausgenutzt.

In S. Brandes, U. Epple, M. Schnell, "Compensation of the Impact of Interference Mitigation by Pulse Blanking on OFDM Systems", Global Telecommunications Conference (GLOBECOM), pp. 1-6, 2009 wird ein Pulse-Blanking-Ansatz mit Power-Detektion im Zeitbereich vorgestellt, wie diese ICI mit einer iterativen Struktur berechnet und vom Signal abgezogen werden kann, um DME in einem L-DACS 1-Empfänger zu unterdrücken. Dieses Verfahren wird im Folgenden als Simple Pulse Blanking SPB bezeichnet. Der obere Pfad von FIG. 5 ohne den Combination-Block CB entspricht dem Blockschaltbild von SPB. Bei diesem Verfahren wird die mittlere Empfangsleistung nach der Tiefpassfilterung $P_{rec}$ gemessen und die Zeitpunkte, an denen die Momentanleistung der komplexen Einhüllenden des Empfangssignals den Schwellwert $\theta$ Prec übersteigt, detektiert. Dabei ist $\theta$ ein Parameter, den es zu optimieren gilt. Das abgetastete diskrete Empfangssignal wird an diesen Zeitpunkten zu Null gesetzt:

$$r^{PB}[n] = \begin{cases} r[n], & \text{if } |r[n]|^2 < \theta \cdot \bar{P}_{rec} \\ 0, & \text{else} \end{cases}$$

(5)

Dieses Blanking (FIG. 5, im Modul FIM) führt zu Inter-Subträger-Interferenzen (ICI), da die Orthogonalität der Subträger verloren geht. Nach der empfangsseitigen Schätzung der gesendeten QAM-Symbole $S_{l,k}$ können die ICI-Werte $I_{l,k}^{ICI}$ iterativ berechnet und vom geblankten Signal abgezogen werden, siehe S. Brandes, U. Epple, M. Schnell, "Compensation of the Impact of Interference Mitigation by Pulse Blanking on OFDM Systems" a.a.O.

Der bestimmende Parameter dieser Technik ist der Schwellwert $\theta$. Wird ein hoher Wert gewählt, so ist die ICI niedrig, aber die Leistung der nicht unterdrückten DME-Störung bleibt hoch. Umgekehrt, wenn ein niedriger Wert gewählt wird, wird das meiste DME geblankt, aber ICI wird größer. Falls eine sukzessive ICI-Auslösung angewandt wird, kann der Schwellwert herab gesetzt werden, da das zusätzliche ICI dort reduziert wird. Ein Tiefpassfilter LF (siehe FIG. 5) ist notwendig, um die DME-Signale mit niedriger Empfangsleistung heraus zu filtern. Falls das Filter LF fehlt, führt der Blankingprozess zu zusätzlichen, vermeidbaren ICI.

Ein Vorschlag, welcher die Frequenzselektivität von DME ausnutzt, wird in U. Epple, D. Shutin, M. Schnell, "Mitigation of Impulsive Frequency-Selective Interference in OFDM Based Systems, IEEE Wireless Communications Letters, pp. 484-487, 2012. gezeigt. Dabei wird Pulse-Blanking erweitert, indem das mit Pulse-Blanking verarbeitete Signal nach der diskreten Fourier-Transformation (DFT) kombiniert wird mit einem Signal, das nicht durch Pulse-Blanking verarbeitet wurde, d.h. es wird der untere Pfad hinzugefügt, siehe FIG. 5. Dort wird der Schritt zum Blanken ausgelassen. Subträger, die nicht von DME-Störung betroffen sind, profitieren von diesem zusätzlichen Pfad.

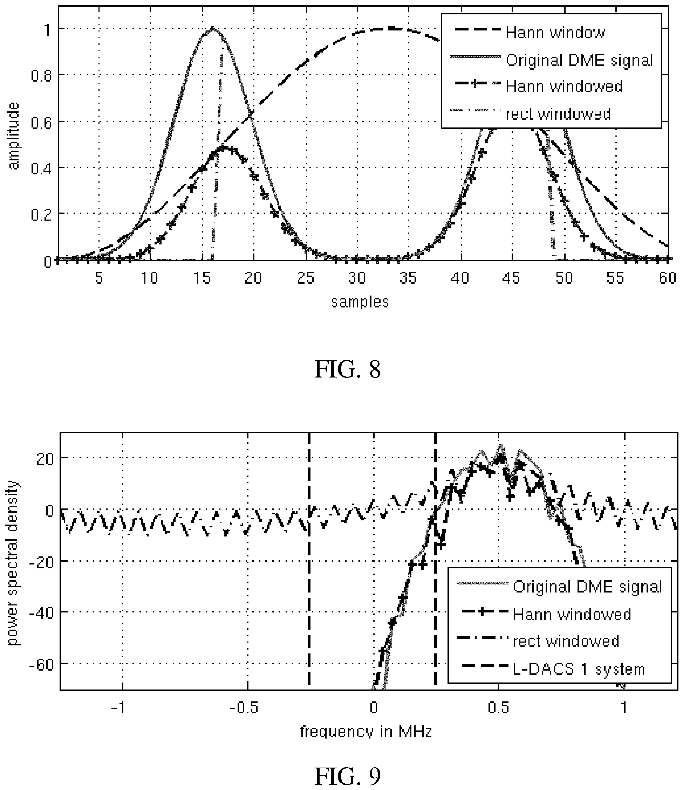

Nach der OFDM-Demodulation werden die Subträgerwerte beider Pfade kombiniert (siehe FIG. 5, Modul CB). Dazu müssen die Signal-zu-Stör-Verhältnisse beider Pfade bekannt sein. Allerdings sind viele DME-Impulse im zusätzlichen Pfad durch die OFDM-Fensterung abgeschnitten (siehe FIG. 5, im Modul OM1) und daher spektral gespreizt. Demnach leidet der obere Pfad unter ICI und restlicher DME-Störung, der untere Pfad leidet nur unter starker DME-Störung. Wenn ein Subträger nicht im Frequenzbereich von DME liegt, ist der untere Pfad vorteilhaft. Die Ausgänge beider Pfade werden nach der DFT im Combination-Block CB kombiniert. Um das zu tun, muss die DME-Interferenz sehr genau detektiert werden, da der Combination-Block CB die Signal-zu-Stör- und-Rausch- Verhältnisse (SINR) von allen Subträgern auf beiden Pfaden kennen muss. Leider kann der Verlust durch suboptimale Kombination sehr hoch sein. Der Ansatz wird im Folgenden als Combination Pulse Blanking CPB bezeichnet. Das Tiefpassfilter LF ist hier ebenfalls notwendig wegen der gleichen Gründe wie bei SPB. Zusätzlich verhindert ein Tiefpass LF eine spektrale Spreizung von DME-Signalen (vgl. FIG. 9), welche durch OFDM-Fensterung im unteren Pfad von FIG. 5 entsteht.

Das Problem von Combination Pulse Blanking CPB ist die Reihenfolge der Verarbeitungsblöcke: Eine OFDM-Fensterung im Modul OM (siehe FIG. 6) steht vor der DME-Unterdrückung. Dies führt zu zeitvarianten Störungen im ungeblankten Pfad. Wenn ein DME-Impuls direkt auf den Flanken des fensterförmigen OFDM-Fensters liegt, so wird die spektrale Form der DME-Signale zerstört und L-DACS1-Frequenzen werden getroffen (dies ist aus in den FIG. 8 und FIG. 9 ersichtlich).

Weiterhin ist aus der US 2014/0376667 A1 ein Verfahren und ein Mehrträgersystem, insbesondere ein Power Line Communication (PLC) -System wie beispielsweise die nach dem G3-PLC-Standard übertragende SPS-Systeme (G3-PLC), zur Verringerung der Störeinflüsse von pulsförmigen Störsignalen bei einer OFDM (Orthogonal Frequency Division Multiplexing) -basierten Datenübertragung bekannt. Nach Rahmenermittlung und Synchronisation werden die OFDM-Symbole, d.h. das im Empfänger empfangene Mehrträgerfrequenzsignal mit den einzelnen Trägerfrequenzen zugeordneten modulierten Daten und überlagerten pulsförmigen Störsignale, demoduliert und weiter verarbeitet, um die übertragenen Daten zu erhalten. Um Datenfehler zu korrigieren, setzen typische Empfänger-Implementierungen auf Fehlerkorrekturmechanismen, wie Verschachtelung und Vorwärtsfehlerkorrektur (FEC) mit Faltungscodierung. FehlerkorrekturMechanismen können jedoch weniger effektiv den Auswirkungen von Kanalrauschen entgegenwirken, wenn die einzelnen Trägerfrequenzen (Hilfsträger, subcarrier) signifikant gestört sind. Beim Verfahren der US 2014/0376667 A1 werden im Empfänger die pulsförmigen Störsignale im modulierten OFDM-basierten Signal detektiert. Zur Ausblendung eines pulsförmigen Störsignals im Empfangssignal ist eine schmalbandige Pulsausblendung auf Basis der Überschreitung eines vordefinierten Energieschwellenwerts vorgesehen. Weiterhin wird das mit der Fensterfunktion multiplizierte Übertragungssignal nach einer Übertragungskanalschätzung und Signalentzerrung dekodiert. Die Übertragungskanalschätzung wird beispielsweise durch Analyse des Energieniveaus für jede einzelne Trägerfrequenz (Hilfsträger, subcarrier) innerhalb des Kommunikationskanals bei Empfang bekannter Signale, wie beispielsweise einer Präambel, Piloten und / oder andere Signale mit bekanntem zugeordnetem Energieniveau durchgeführt. Weiterhin wird für diejenigen Daten, die den von einem pulsförmigen Störsignal betroffenen Trägerfrequenzen zugeordnet sind, vor der Dekodierung im Empfänger jeweils auf null gesetzt. Anschließend wird das abgetastete Empfangssignal einer blanking unit zum frequenzselektiven Pulse-Blanking zugeführt, welche aus einer Analyse-Filter-Bank mit M Subbänder und einem Modul zum frequenzselektiven Pulse-Blanking der Subband-Signale besteht.

Schließlich ist aus M.B. Celebi; I. Guvenc; H. Arslan "Interference Mitigation for LTE Uplink Through Iterative Blanking", veröffentlicht in: IEEE Global Telecommunications Conference, 2011, Seiten 1-6 ein Filter-Bank-Pulse-Blanking-Verfahren bekannt, bei dem die Analyse-Filter-Bank vor einer OFDM-Fensterung eingesetzt wird, derart, dass Pulse-Blanking subbandselektiv angewandt wird.

Der Erfindung liegt gegenüber dem Pulse-Blanking mit Kombinationseinheit nach der OFDM-Demodulation die Aufgabe zugrunde, weitgehend zu vermeiden, dass die Impulsstörung bei der OFDM-Fensterung deformiert wird, und sowohl die OFDM-Demodulation als auch die Kanalcodierung angepasst wird.

Diese Aufgabe wird durch ein Verfahren nach Anspruch 1 oder 3, und einen entsprechenden Empfänger nach Anspruch 5 gelöst.

Im Vergleich zum Stand der Technik hat die Filter-Bank-Implementierung FBPB gemäß Patentanspruch 1 eine höhere Komplexität als die Verfahren aus dem Stand der Technik. Die effizientere blockbasierte Struktur/Verfahren BBFIM gemäß Patentanspruch 3 hat eine mit dem Stand der Technik vergleichbare Komplexität.

Um den Nachteilen des aus U. Epple, D. Shutin, M. Schnell, "Mitigation of Impulsive Frequency-Selective Interference in OFDM Based Systems a.a.O bekannten Verfahrens entgegenzuwirken, wird erfindungsgemäß die Interferenzunterdrückung vor die OFDM-Demodulation gezogen und sowohl die OFDM-Demodulation, als auch die Kanaldecodierung angepasst. Dadurch wird vermieden, dass die Impulsstörung bei der OFDM-Fensterung deformiert wird. Die Wahl von Anzahl und Typ der Filter kann auf die Frequenzbandbreiten vom Nutz- und Störsignal angepasst werden. Durch die Subband-Zerlegung bei der Filter-Bank-Implementierung FBPB mittels der Analyse Filter-Bank AFB in der blanking unit BU kann Pulse-Blanking nun direkt subbandselektiv, d.h. frequenzselektiv, angewandt werden. Dadurch wird das Nutzsignal nur dort verändert, wo auch Störung anliegt. Außerdem wird die Schätzung der Störleistung im Zeit- und Frequenzbereich erleichtert, da das Empfangssignal mit Hilfe der Filter-Bank in vielen Subbändern vorliegt. Dies führt dazu, dass die ICI durch dieses Verfahren stark reduziert wird. Die verbleibende Störung wird mit Hilfe der blanking mitigation unit BMU geschätzt und an die weiteren Komponenten des OFDM-Empfängers weitergeleitet. All diese Maßnahmen führen zu einer deutlich niedrigeren Bitfehlerrate am Ausgang des Empfängers oder bei gleicher Sendeleistung können stärkere Störungen bzw. ein kleinerer Störabstand (beim Stand der Technik mindestens 45 nm (Nautische Meile)) zugelassen werden.

Die effiziente blockbasierte Inferenzunterdrückungsmethode BBFIM verliert durch die Blockverarbeitung an Präzision, d.h. das Nutzsignal wird stärker verändert als beim Filter-Bank-Ansatz. Dies führt zu einer höheren Bitfehlerrate, die jedoch immer noch geringer ausfällt als beim Stand der Technik. Die fehlende Anpassung der OFDM-Empfänger-Komponenten führt dazu, dass vor allem bei höheren Modulationsstufen wie z.B. 64-QAM die Lücke zum Filter-Bank-Verfahren größer wird.

Weitere Vorteile und Einzelheiten lassen sich der nachfolgenden Beschreibung einer bevorzugter Ausführungsformen der Erfindung unter Bezugnahme auf die Zeichnung entnehmen. In der Zeichnung zeigt:

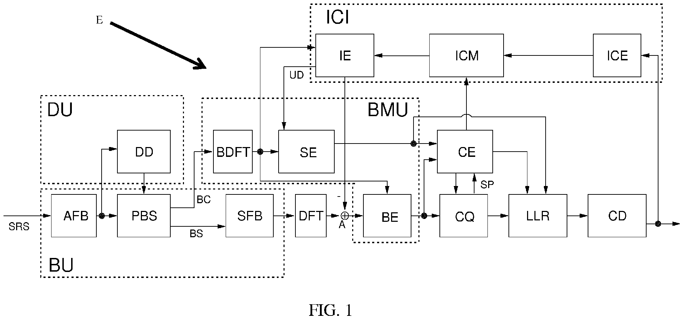

FIG. 1 das Blockschaltbild eines erfindungsgemäßen Empfängers zur frequenz- und zeitselektiven Interferenzunterdrückung,

FIG. 2 ein Blockschaltbild eines L-DACS1 Senders nach dem Stand der Technik,

FIG. 3 ein Diagramm mit ungefilterten L-DACS1 und DME Signal mit einem Frequenzoffset von -500 kHz und +500 kHz nach dem Stand der Technik,

FIG. 4 ein Diagramm mit ungefilterten L-DACS 1 und DME Signal am L-DACS1 Empfänger im Zeitbereich nach dem Stand der Technik,

FIG. 5 ein Blockschaltbild für einen Empfänger mit puls blanking und Kombinationseinheit nach der DFT entsprechend Stand der Technik,

FIG. 6 ein Blockschaltbild für einen Empfänger, bei dem DME-Unterdrückung und OFDM-Fensterung getauscht sind,

FIG. 7 ein Ablauf-Diagramm für ein block-based-frequency-interference-mitigation-Verfahren BBFIM gemäß der Erfindung,

FIG. 8 ein Diagramm für ein ungefenstertes, eine Rechteck-, sowie ein Hanngefenstertes DME-Signal im Zeitbereich,

FIG. 9 ein Diagramm für das Leistungsdichtespektrum der DME-Signale nach FIG. 8,

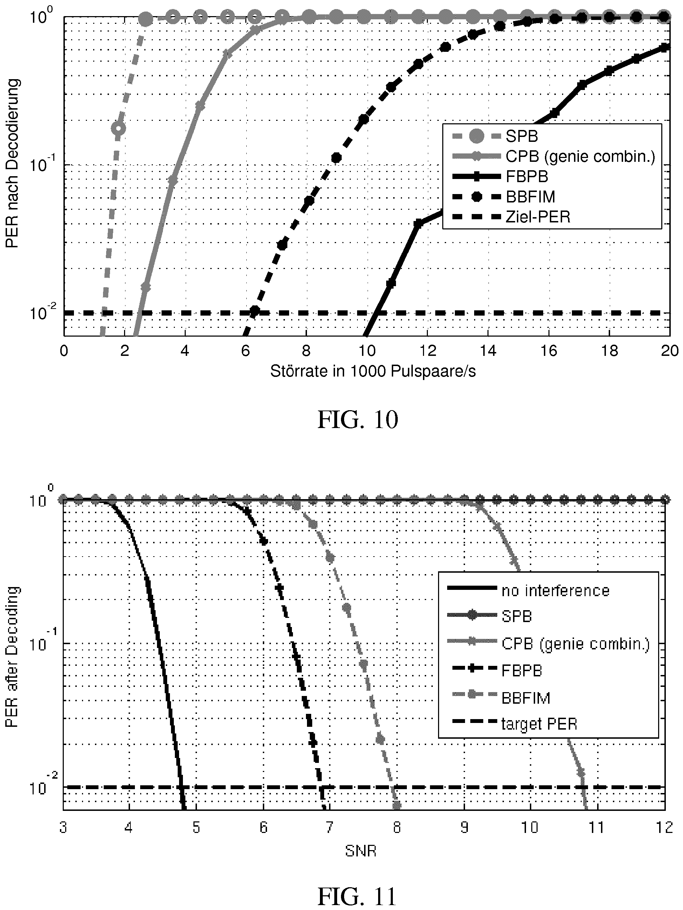

FIG. 10 ein Diagramm für die Paketfehlerrate (PER) und für variierende Anzahl an Abtastungen bei einem $E_b/N_0$-Wert von 6.0 dB,

FIG. 11 ein Diagramm für die Paketfehlerrate (PER) und für variierende $E_b/N_0$-Werte beim worst-case,

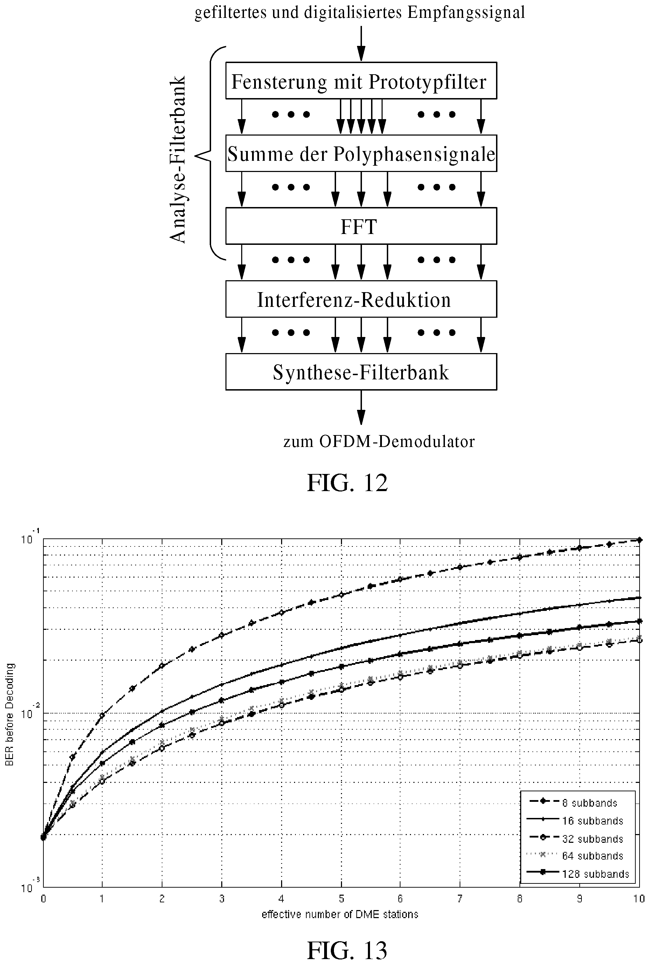

FIG. 12 ein Ablauf-Diagramm für ein Filter-Bank-Pulse-Blanking-Verfahren FBPB vor der OFDM-Fensterung gemäß der Erfindung,

FIG. 13 ein Diagramm für die Bitfehlerrate (BER) vor der Decodierung und für variierende Anzahl von TACAN/DME Stationen bei unterschiedlicher Anzahl von Subbändern,

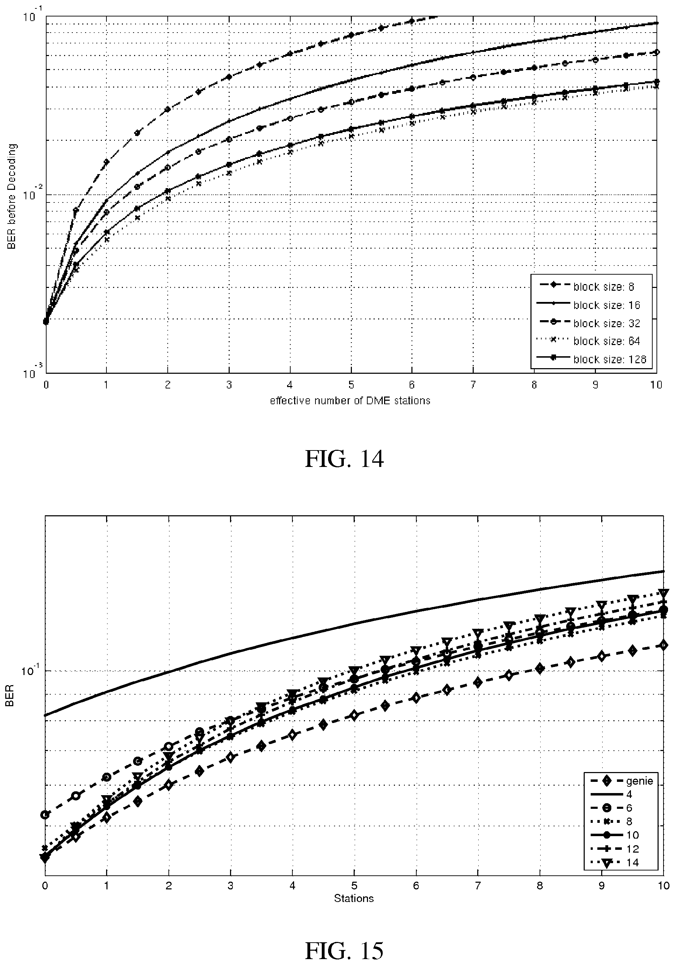

FIG. 14 ein Diagramm für die Bitfehlerrate (BER) vor der Decodierung und für variierende Anzahl von TACAN/DME Stationen bei unterschiedlicher Blockgröße,

FIG. 15 ein Diagramm für die Bitfehlerrate (BER) vor der Decodierung und für variierende Anzahl von TACAN/DME Stationen bei unterschiedlichen Schwellwerten $\theta$,

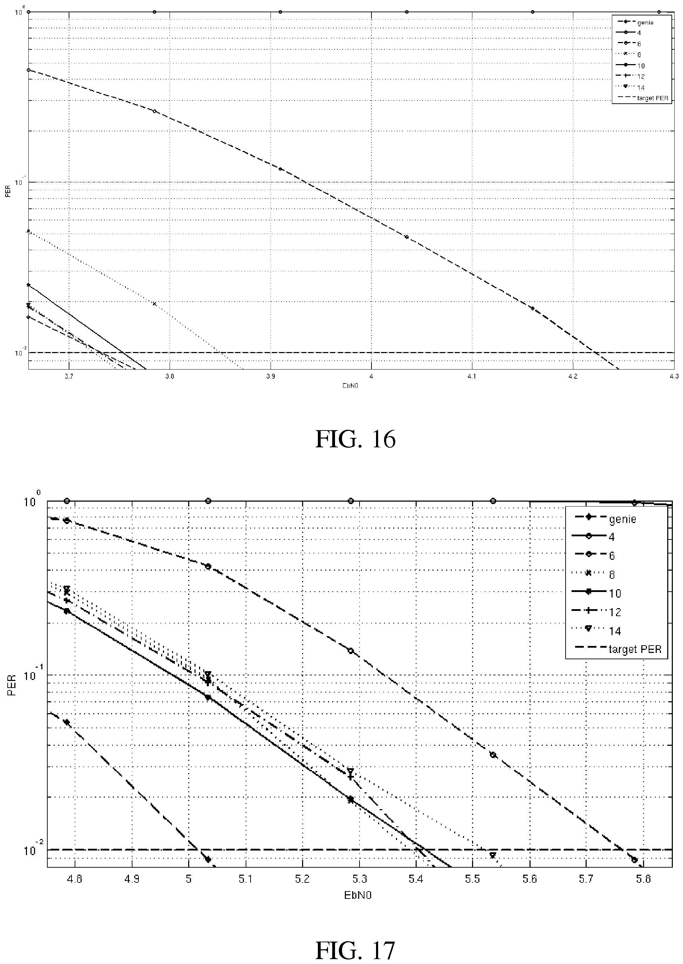

FIG. 16 ein Diagramm für die Paketfehlerrate (PER) und für verschiedene $E_b/N_0$-Werte bei unterschiedlichen Schwellwerten $\theta$ und ohne DME-Interferenz,

FIG. 17 ein Diagramm für die Paketfehlerrate (PER) und für verschiedene $E_b/N_0$-Werte bei unterschiedlichen Schwellwerten $\theta$ und moderater DME-Interferenz,

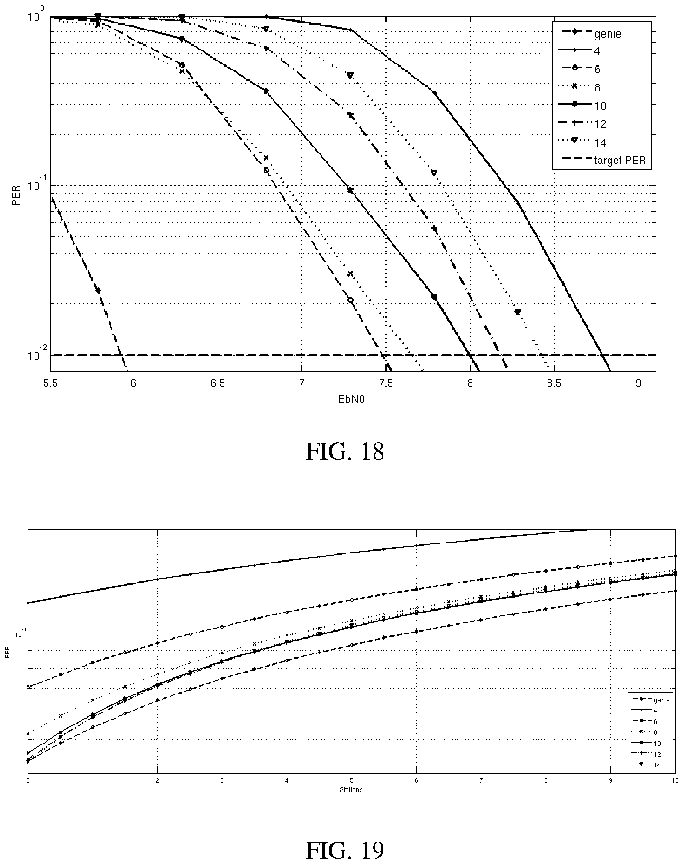

FIG. 18 ein Diagramm für die Paketfehlerrate (PER) und für verschiedene $E_b/N_0$-Werte bei unterschiedlichen Schwellwerten $\theta$ und starker DME-Interferenz,

FIG. 19 ein Diagramm für die Bitfehlerrate (BER) vor der Decodierung und für variierende Anzahl von TACAN/DME Stationen bei unterschiedlichen Schwellwerten $\theta$,

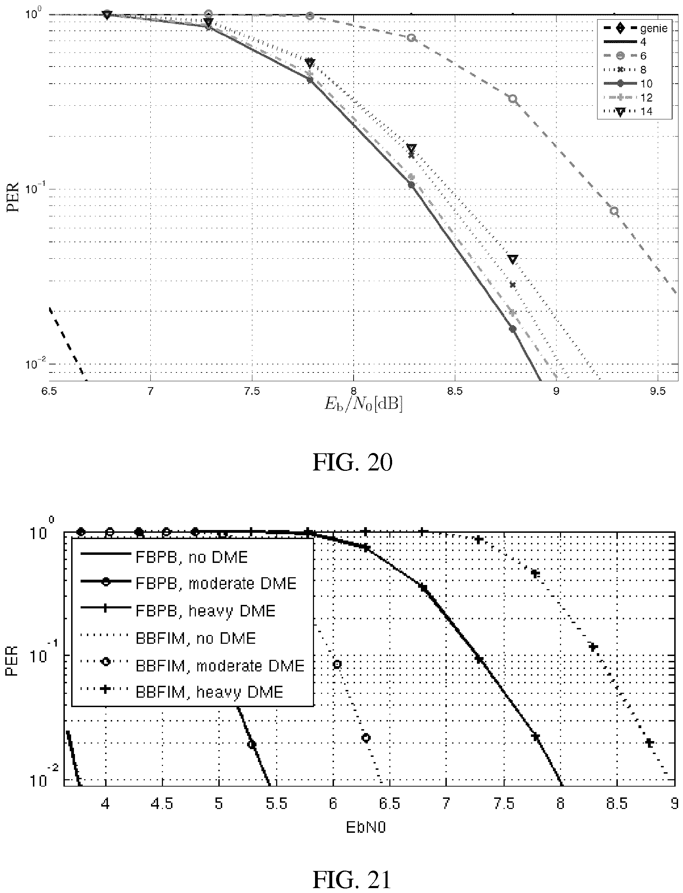

FIG. 20 ein Diagramm für die Paketfehlerrate (PER) und für variierende Anzahl von TACAN/DME Stationen bei unterschiedlichen Schwellwerten $\theta$ und starker DME-Interferenz und

FIG. 21 ein Diagramm für die Paketfehlerrate (PER) und für verschiedene $E_b/N_0$-Werte beim Schwellwert $\theta = 10$ für FBPB und $\theta = 12$ für BBFIM und bei unterschiedlicher DME-Interferenz gemäß der Erfindung.

Die erfindungsgemäße Empfängerstruktur einer frequenz- und zeitselektiven Interferenzunterdrückung für ein Kommunikationssystem, basierend auf OFDM, mit Hilfe einer Filter-Bank ist in FIG. 1 dargestellt. Erfindungswesentliche Bestandteile des Empfängers E sind eine blanking unit BU zum frequenzselektiven Pulse-Blanking mit Hilfe einer Filter-Bank, eine detection unit DU zur frequenzselektive Detektion der Störung, eine blanking mitigation unit BMU zur Anpassung an eingebrachte Störungen durch Pulse-Blanking und eine ICI cancellation unit ICU zur Beseitigung der eingebrachten Störung durch Pulse-Blanking.

In Q. Zhang, Y. Zheng, S. Wilson, "Excision of Distance Measuring Equipment Interference from Radio Astronomy Signals", The astronomic journal, pp. 2933-2939, 2005, wird die Unterdrückung von DME-Signalen in breitbandigen Astronomie-Signalen mit Hilfe einer Filter-Bank untersucht. Diese Idee wird nun auf ein OFDM-System übertragen. Die erfindungsgemäße blanking unit BU besteht aus der Analyse-Filter-Bank AFB mit M Subbänder, dem Modul zum frequenzselektiven Pulse-Blanking der Subband-Signale PBS (vergleichbar mit einem Schalter je Spektralbereich, der Signal weitergibt oder unterdrückt, insbesondere Ausgabe des in Spektralanteile zerlegten Signals für DME-Detektion über Leitung BS und Ausgabe der Steuerinformation des pulse blanking, d.h. quasi der Schalterstellungen je Spektralbereich über der Zeit bzw. pro Block über Leitung BC) und einer Synthese-Filter-Bank SFB, welche das Signal (über BS) wieder zusammenfügt. Die Analyse-Filter-Bank AFB, welche das Empfangssignal SRS in mehrere Subbänder frequenzselektiv zerteilt, wird vor der OFDM-Fensterung eingesetzt. Dabei kann bei der Implementierung die erfindungsgemäße Polyphasenstruktur verwendet werden. Durch die Subbandzerlegung kann Pulse-Blanking subbandselektiv angewandt werden. Das heißt, dass Subbänder, die stark von Störung betroffen sind, stärker unterdrückt werden können, als Subbänder, die weniger stark betroffen sind. Nach Aufteilung in verschiedene Subbänder mit der Analyse-Filter-Bank AFB kann der Blanking-Prozess in jedem Subband separat angewandt werden. Dadurch wird das Nutzsignal weniger stark angegriffen als bei reinem Pulse-Blanking. Die Anzahl der Subbänder beträgt M. In Q. Zhang, Y. Zheng, S. Wilson, "Excision of Distance Measuring Equipment Interference from Radio Astronomy Signals" a.a.O. wird eine Filter-Bank ganz allgemein (d.h. nicht OFDM-spezifisch) zur Unterdrückung von schmalbandiger Störung in einem breitbandigen System vorgeschlagen.

Die Detektion der Störung in der detection unit DU (insbesondere im Modul DME detection DD) wird durch die Subbandzerlegung vereinfacht, weil Subbänder vorliegen, die stark von der Störung betroffen sind. Die Erkennung vorhandener DME-Störimpulse erfolgt über der Zeit bzw. pro Block und für jeden Spektralanteil, wobei zur Entscheidung, ob eine Störung in einem Spektralbereich vorliegt, die Information über andere Spektralanteile mit verwenden kann. Somit kann eine Interferenz-Detektion angewandt werden, um die Entscheidung zur Pulsausblendung zu verbessern. Ist diese nicht bekannt, kann Pulse-Blanking mit Power-Detektion, siehe S. Brandes, S. Gligorevic, M. Ehammer, T. Gräupl, R. Dittrich, "Expected B-AMC System Performance" a.a.O., auch hier eingesetzt werden, nur eben subbandselektiv.

Die eingebrachte ICI ist durch die subbandselektive Unterdrückung stark reduziert. Die verbleibende Störung wird mit Hilfe der blanking mitigation unit BMU geschätzt. Diese Information wird nun an folgenden drei Stellen genutzt:

1. Zur Kanalschätzung im Modul CE werden Pilotwerte SP verwendet. Ist bekannt, wie stark welcher Pilot von ICI betroffen ist, kann dies bei der Kanalschätzung berücksichtigt werden.
2. Die ICI-Schätzung im Modul IE wird außerdem bei der Berechnung der Zuverlässigkeitsinformationen für die Kanaldecodierung im Modul CD ausgenutzt. Hierbei werden Symbole, bei denen eine hohe ICI-Störung geschätzt wurde, als unzuverlässig eingestuft.
3. Im Modul blanking equalization BE wird dem Signalenergieverlust durch Pulse-Blanking entgegengewirkt. Diese Entzerrung arbeitet optimal.

Die iterative Schätzung und Auslöschung von eingebrachter ICI bei OFDM wird in der Literatur oft beschrieben. Beispielsweise wird in S. Brandes, U. Epple, M. Schnell, "Compensation of the Impact of Interference Mitigation by Pulse Blanking on OFDM Systems" a.a.O. eine Implementierung dazu im Falle von Pulse-Blanking und OFDM beschrieben. Erfindungsgemäß wird in der ICI cancellation unit ICU das Verfahren erweitert, da ICI nun subbandselektiv entsteht und entsprechend anders geschätzt werden muss.

Beim erfindungsgemäßen Filter-Bank-Pulse-Blanking-Verfahren FBPB werden DME-Unterdrückung und OFDM-Fensterung getauscht, siehe FIG. 6 sowie im Einzelnen nachfolgend. Wegen des frequenzselektiven Charakters von DME sollte die Unterdrückung im Frequenzbereich stattfinden, ohne die impulsförmige Charakteristik außer Acht zu lassen.

Eine Analyse der Schwellwerte für Power-Detektion gemäß der Erfindung wird weiter unten ausführlich beschrieben. Vor der OFDM-Demodulation, werden die verarbeiteten Subbänder im Synthesis-Schritt wieder zusammengefügt. Es besteht ein Zielkonflikt zwischen der Auflösung in Zeit- und Frequenzbereich. Die Anzahl der Subbänder und der Filter-Typ bestimmen diesen Zielkonflikt. Ein Tiefpassfilter am Empfänger kann ausgelassen werden, da die DME-Signale frequenzselektiv unterdrückt werden. Die erfindungsgemäße Implementierung mit Hilfe einer Polyphasenstruktur wird nachfolgend ausführlich beschrieben.

In jedem Subband m wird das abgetastete Empfangssignal r[n] mit einer finiten Impulsantwort (FIR) $h_m[n]$ der Länge K gefiltert, wobei m = {0, ..., M - 1} gilt. Die Subband-Filter werden durch Modulation eines Tiefpassfilters $h_0[n]$ erzeugt:

$$h_m[n] = h_0[n] \cdot w_M^{-mn} \qquad (6)$$

wobei $w_M = e^{-j\,2\pi/M}$ gilt. Um die Komplexität herab zu setzen, wird erfindungsgemäß die Synthese-Filter-Bank in eine Polyphasenstruktur gebracht werden:

$$r_m[n] = r[n] * h_m[n] = \sum_{k=-K/2}^{K/2-1} r[n-k] \cdot h_0[k] \cdot w_M^{-mk} \qquad (7)$$

$$= \sum_{\kappa=0}^{M-1} w_M^{-m\kappa} \sum_{\lambda=-K/2M}^{K/2M-1} r[n-\lambda M - \kappa] \cdot h_0[\lambda M + \kappa], \qquad (8)$$

wobei die zweite Summe in (6) dem gefensterten und periodisch erweiterten Eingangssignal entspricht. Das Fenster entspricht der Impulsantwort des Prototyp-Filters. Für jeden Ausgangswert n, wird eine schnelle Fourier-Transformation (fast Fourier transform) FFT der Länge M angewandt. Das Blockschaltbild dieser Implementierung ist in FIG. 12 gezeigt.

Ein Vergleich hinsichtlich Komplexität und Leistungsfähigkeit mit anderen Pulse-Blanking-Verfahren mit der Annahme einer perfekten DME-Detektion wird weiter unten gemacht. Zunächst wird jedoch eine Power-Detektion für die DME-Detektion gezeigt und für verschiedene Schwellwerte analysiert.

Nach der Aufteilung in verschiedene Subbänder kann der Blankingprozess in jedem Subband angewandt werden. Pulse-Blanking mit Power-Detektion ist ein sehr einfaches Verfahren. Das Signal $r_m[n]$ im Subband m (m $\in$ {0, 1, ... ,M - 1}) wird zu Null gesetzt an Position n, wenn die Momentanleistung des Empfangssignals im m-ten Subband $|r_m[n]|^2$ den Schwellwert $\theta \cdot \overline{P}_m[n]$ überschreitet:

$$r_m^{\mathrm{IM}}[n] = \begin{cases} r_m[n], & \text{if } |r_m[n]|^2 < \theta \cdot P_m \\ 0, & \text{else} \end{cases} \qquad (9)$$

$\overline{P}_m$ ist die mittlere Empfangsleistung des L-DACS1-Signals auf dem Subband m und $\theta$ ist der Power-Detektion-Parameter. Vor der OFDM-Demodulation werden die Subbänder in der Synthese-Filter-Bank aufsummiert.

Der angepasste Schwellwert $\theta$ ist ein Design-Parameter. Eine intuitive Wahl ist $\theta = 1$, das ein guter Kompromiss zwischen Störunterdrückung und ICI-Entstehung ist. Anstatt die Entscheidung zur Ausblendung der Subbandsignale hart zu treffen, wenn ein bestimmter Schwellwert erreicht wird, kann auch eine weiche Entscheidung getroffen werden, wenn die mittlere Leistung des Nutzsignals $P_m$, die Störvarianz $N_m^{\mathrm{awgn}}$ und die Momentanleistung der Impulsstörung $P_m^{\mathrm{pulse}}[n]$ auf allen Subbändern verfügbar ist:

$$r_m^{\mathrm{MMSE}}[n] = r_m[n]c_m[n] \qquad (10)$$

mit

$$c_m[n] = \frac{P_m^{\text{useful}}}{P_m^{\text{useful}} + N_m^{\text{awgn}} + P_m^{\text{pulse}}[n]} \tag{11}$$

Die Anpassung der OFDM-Empfängerkomponenten an den Einfluss durch Pulsausblendung berücksichtigt die SINR nach der Filter-Bank-Pulsunterdrückung (im SINR estimation Modul SE der blanking unit BU, diese schätzt die Signalqualität für die OFDM-Subträger entsprechend den verbleibenden Verzerrungen sowie den noch enthaltenen DME-Störungen, um diese in der weiteren "normalen" Verarbeitung zu berücksichtigen; d.h. Träger mit Reststörungen werden z.B. bei der Kanaldecodierung geringer gewichtet, dies wird realisiert durch geeignete Skalierung während der LLR-Berechnung), die Entzerrung der Pulsausblendung, die Anpassung der Kanalschätzung (im channel estimation Modul CE), die Anpassung der LLR-Berechnung (im LLRcalculation Modul LLR) und die ICI-Auslöschung (in der ICI cancellation unit ICI), wie im Folgenden beschrieben wird.

Das SINR auf den Subträgern k eines OFDM-Symbols kann geschrieben werden als

$$\text{SINR}(k) = \frac{E^{\text{used}'}(k)}{E^{\text{awgn}'}(k) + E^{\text{ICI}}(k) + E^{\text{pulse}'}(k)} \tag{12}$$

wobei $E^{\text{used}'}(k)$, $E^{\text{awgn}'}(k)$, $E^{\text{ICI}}(k)$ und $E^{\text{pulse}'}(k)$ die Energien vom Nutzsignal, Rauschen, ICI und Pulsstörung nach der Pulsausblendung auf dem Subträger k darstellen. Die folgenden Formeln sind weiter unten hergeleitet.

Die Frequenzantwort vom Subträger k im Subband m ist $H_m^{\text{FBPB}}(k)$. Die Restenergie des Nutzsignals ist dann

$$E^{\text{used}'}(k) = \sum_{m=0}^{M-1} H_m^{\text{FBPB}}(k) \left( \frac{1}{N} \sum_n c_m[n] \right)^2 E^{\text{useful}} \tag{13}$$

Die Summenbildung gemäß Gleichung (13) erfolgt in der Praxis für den Laufindex n von 0 bis K-1. Der Erwartungswert der Rauschenergie ist

$$\text{E}\left\{ E^{\text{awgn}'}(\kappa) \right\} = E^{\text{awgn}} \sum_{k=0}^{K-1} \left| \sum_{m=0}^{M-1} H_m^{\text{FBPB}}(k) C_m(\kappa - k) \right|^2 \tag{14}$$

wobei Cm(k) die DFT-Transformation des Blankingfensters/ Ausblendungsfensters cm[n] darstellt.

Der Erwartungswert der ICI-Energie ist

$$\text{E}\left\{ E^{\text{ICI}}(\kappa) \right\} = \sum_{\substack{k=0 \\ k \neq \kappa}}^{K-1} E^{\text{LDACS}}(k) \left| \sum_{m=0}^{M-1} H_m^{\text{FBPB}}(k) C_m(\kappa - k) \right|^2 \tag{15}$$

In U. Epple, D. Shutin, M. Schnell, "Mitigation of Impulsive Frequency-Selective Interference in OFDM Based Systems, IEEE Wireless Communications Letters a.a.O. wird eine Approximation der ICI-Energie beschrieben, welche nur gültig ist, wenn die Ausblendungskoeffizienten unabhängig aber gleichwahrscheinlich sind. Dies ist allerdings nicht der Fall, wenn Impulsstörung länger als ein Abtastwert andauert.

Die Energie der weich unterdrückten Impulsstörung kann nicht direkt berechnet werden, da sie Kanaldeformation, Empfangsfilterung, Filter-Bank-Filterung und subbandselektive weiche Pulsausblendung durchläuft. Wenn ein Impuls auftritt, wird es jedoch unterdrückt und daher ist das ICI entscheidend für das tatsächliche SINR.

Die Pulsausblendung führt zu einer Energiereduktion auf den Datensubträgern und zu ICI (siehe U. Epple, K.

Shibli, M. Schnell, "Investigation of Blanking Nonlinearity in OFDM Systems" a.a.O.). Die Energiereduktion kann durch

$$C(0) = \frac{1}{\sqrt{\sqrt{N}}} \sum_{n=0}^{N-1} c[n]$$

für SPB und CPB, sowie durch

$$R^{\mathrm{ICI'}}(k) = \sum_{\substack{\kappa=0 \\ \kappa \neq k}}^{K-1} S(\kappa)H(\kappa)C(k-\kappa)$$

für FBPB berechnet werden. Danach können die Werte nach der DFT (welche die Steuerinformation für die Pulsunterdrückung in den Frequenzbereich umsetzt, woraus anschließend die durch die Pulsausblendung in das Nutzsignal eingebrachten Verzerrungen abgeleitet werden können) mit Hilfe der Pulsausblendungsentzerrungseinheit BE in der blanking mitigation unit BMU entzerrt werden, d.h. diese Verzerrungen im Nutzsignal werden teilweise kompensiert, bevor dieses der "normalen" OFDM-Demodulation zugeführt wird.

$$R''(k) = \frac{R'(k)}{\sqrt{V_{\mathrm{LDACS}}(k)}} \tag{16}$$

Das Argument k von $V_{\mathrm{LDACS}}(k)$ kann für Simple Pulse Blanking SPB und Combination Pulse Blanking CPB ausgelassen werden, da alle Subträger gleichermaßen betroffen sind. Natürlich steigt auch die ICI-Energie durch diesen Prozess. Dies muss berücksichtigt werden.

Falls pilotgestützte Kanalschätzung angewandt wird, ist die Kenntnis des SINR-Wertes auf jeden Piloten vorteilhaft, um die Genauigkeit der Kanalschätzung zu verbessern. Dazu wird der SINR-Wert von jedem Piloten durch Gleichung (12) berechnet und an die Kanalschätzeinheit CE geleitet Dann kann eine MMSEbasierte Kanalschätzung auf die SINR-Werte angepasst werden (siehe U. Epple, K. Shibli, M. Schnell, "Investigation of Blanking Nonlinearity in OFDM Systems" a.a.O.).

Besitzt man eine Schätzung der Sendesymbole ^S(k), so kann das ICI durch

$$C(0) = \frac{1}{\sqrt{\sqrt{N}}} \sum_{n=0}^{N-1} c[n]$$

berechnet werden, indem der geschätzte Kanalfrequenzgang ^H (k) und die DFT der Auslöschungskoeffizienten C(k) genutzt werden.

Wenn eine Filter-Bank verwendet wird, so kann das ICI durch Gleichung (15) berechnet werden, mit dem Frequenzgang des Subband-Filters $H_m^{\mathrm{FBPB}}(k)$. Die DFT-Werte der Auslöschungskoeffizienten $C_m(k)$ sind dann frequenzselektiv.

Die Herleitung der vorstehenden Gleichungen ist wie folgt:

Zur Analyse der Ausblendungseffekte kann das abgetastete Empfangssignal eines OFDM-Symbols nach Pulsausblendung geschrieben werden als:

$$r^{'}[n] = c[n]r[n]$$
$$= c[n]\left(s[n] * h[n] + n^{\mathrm{awgn}}[n] + i^{\mathrm{pulse}}[n]\right) \quad (17)$$

Die DFT ist

$$R^{'}(k) = C(k) * R(k)$$
$$= C(k) * \left(S(k)H(k) + N^{\mathrm{awgn}}(k) + I^{\mathrm{pulse}}(k)\right) \quad (18)$$

Gleichung (17) kann aufgeteilt werden: das deformierte Nutzsignal, das deformierte AWGN Rauschsignal und die teilweise unterdrückte Impulsstörung. Das deformierte Nutzsignal besteht aus dem energiereduzierten Signal auf allen Subträgern und der eingebrachten ICI.
Nachfolgend wird die Berechnung des Energiereduktionsfaktors des Nutzsignals und die Berechnung der genauen ICI-Werte nach der Pulsausblendung, sowie dessen Abschätzung beschrieben, insbesondere wird die Schätzung der reduzierten Rauschvarianz beschrieben, wobei angenommen wird, dass die Reststörung der Impulsstörung nach der Ausblendung vernachlässigbar ist.

$$R^{\mathrm{useful+ICI}'}(k) = (S(k)H(k)) * C(k) \quad (19)$$

$$R^{\mathrm{useful+ICI}'}(k) = \sum_{\kappa=0}^{K-1} S(\kappa)H(\kappa)C(k-\kappa) \quad (20)$$

wobei C(-k) = C(k)* gilt. Das heißt, dass die Fensterung zu einer Faltung des Spektrums ohne Pulsausblendung S(k)H(k) mit der DFT-Transformation C(k) der Fensterkoeffizienten der Pulsausblendung c[n] entspricht. Diese Summe kann auf zwei Teile aufgeteilt werden. Der erste Teil beinhaltet die Energiereduktion des Nutzsignals auf jedem Subträger:

$$R^{\mathrm{useful}'}(k) = S(k)H(k)C(0) \quad (21)$$

mit

$$C(0) = \frac{1}{\sqrt{\sqrt{N}}}\sum_{n=0}^{N-1} c[n] \quad (22)$$

Der Energiereduktionsfaktor auf dem Subträger k ist

$$V(k) = C(0)^2 = \left(\frac{1}{\sqrt{N}}\sum_{n=0}^{N-1} c[n]\right)^2 \quad (23)$$

Der zweite Teil besteht aus den ICI-Werten

$$R^{\mathrm{ICI}'}(k) = \sum_{\substack{\kappa=0 \\ \kappa\neq k}}^{K-1} S(\kappa)H(\kappa)C(k-\kappa) \tag{24}$$

Der genaue ICI-Wert kann nun berechnet werden, wenn eine Schätzung der Sendewerte *S(k)* vorliegt, siehe ICI-Auslöschungseinheit. Die ICI-Energie auf dem Subträger k kann berechnet werden über

$$E^{\mathrm{ICI}}(k) = \left| \sum_{\substack{\kappa=0 \\ \kappa\neq k}}^{K-1} \underbrace{S(\kappa)C(k-\kappa)}_{\mathrm{zero-mean,i.i.d.}} \right|^2 \tag{25}$$

Die Werte für *S(k)* und *C(k)* sind mittelwertfrei und die Werte von *S(k)* sind unabhängig voneinander aber identisch verteilt, daher ist der Erwartungswert

$$\mathrm{E}\left\{E^{\mathrm{ICI}}(k)\right\} = \sum_{\substack{\kappa=0 \\ \kappa\neq k}}^{K-1} E^{\mathrm{useful}}(\kappa)\left|C(k-\kappa)\right|^2 \tag{26}$$

mit

$$E^{\mathrm{useful}}(\kappa) = \mathrm{E}\left\{\left|S(\kappa)\mathrm{e}^{\mathrm{j}\Phi_k}\right|\right\}.$$

Wird nun ein Filter-Bank-Pulsausblendungs-Verfahren verwendet, so ist die Energiereduktion Subträgerselektiv. Da nun der Frequenzgang des Subbandfilters $H_m^{\mathrm{FBPB}}(k)$ und die subbandselektiven Auslöschungskoeffizienten *cn*[*n*] bekannt sind, können (Gleichung 26), (Gleichung 22) und (Gleichung 24) angepasst werden:

$$R^{\mathrm{ICI}'}(k) = \sum_{\substack{\kappa=0 \\ \kappa\neq k}}^{K-1} S(\kappa)H(\kappa)C(k-\kappa) \tag{27}$$

und

$$V(k) = \sum_{m=0}^{M-1} H_m^{\mathrm{FBPB}}(k) \left(\frac{1}{\sqrt{N}} \sum_{n=0}^{N-1} c_m[n]\right)^2 \tag{28}$$

$$E^{\mathrm{ICI}}(\kappa) = \left| \sum_{\substack{k=0 \\ k\neq\kappa}}^{K-1} \sum_{m=0}^{M-1} \underbrace{S(k)H_m^{\mathrm{FBPB}}(k)C_m(\kappa-k)}_{\mathrm{zero-mean,i.i.d.w.r.t.}k} \right|^2 \qquad (29)$$

Der Erwartungswert lautet

$$\mathrm{E}\left\{E^{\mathrm{ICI}}(\kappa)\right\} = \sum_{\substack{k=0 \\ k\neq\kappa}}^{K-1} E^{\mathrm{useful}}(k) \left| \sum_{m=0}^{M-1} H_m^{\mathrm{FBPB}}(k)C_m(\kappa-k) \right|^2 \qquad (30)$$

Für die Schätzung der Rauschvarianz nach der Pulsausblendung lautet äquivalent die Energie des Rauschteils nach der Pulsausblendung und DFT

$$E^{\mathrm{awgn}'}(\kappa) = \left| \sum_{k=0}^{K-1} \underbrace{N(k)C(\kappa-k)}_{\mathrm{zero-mean,i.i.d.}} \right| \qquad (31)$$

Der Erwartungswert ist

$$\mathrm{E}\left\{E^{\mathrm{awgn}'}\right\} = E^{\mathrm{awgn}} \sum_{k=0}^{K-1} |C(\kappa-k)|^2 \qquad (32)$$

$$\mathrm{E}\left\{E^{\mathrm{awgn}'}\right\} = E^{\mathrm{awgn}} \sum_{k=0}^{K-1} |c(k)|^2 \qquad (33)$$

Wird eine Filter-Bank verwendet, ändert sich die Berechnung des Erwartungswertes zu:

$$\mathrm{E}\left\{E^{\mathrm{awgn}'}(\kappa)\right\} = E^{\mathrm{awgn}} \sum_{k=0}^{K-1} \left| \sum_{m=0}^{M-1} H_m^{\mathrm{FBPB}}(k)C_m(\kappa-k) \right|^2 \qquad (34)$$

Das erfindungsgemäße Filter Bank Pulse Blanking Verfahren-FBPB umfasst folgende Punkte:

- Kombination einer Filter-Bank mit Pulse-Blanking in der blanking unit BU zur Unterdrückung der frequenzselektiven Impulsstörung bei OFDM,
- Algorithmus zur Schätzung von DME in den Subbändern durch Ausnutzung der spektralen Form,
- Anpassung der OFDM-Demodulation und Kanaldecodierung an eingebrachte Störungen durch das Pulse-Blanking,
- Zur weiteren Verbesserung der Empfangsqualität, Implementierung einer ICI-Auslöschung durch eine iterative Rückführung, die das vermutete Sendesignal SRS aus dem letzten Decodierergebnis rekonstruiert (über eine Verbindungsleitung vom Modul zur Kanaldecodierung CD, Modul zur Kanalschätzung CE und Modul zur Kanalmultiplikation ICM), daraus die tatsächlichen Störungen im Nutzsignal schätzt (ICI cancellation unit (ICU)) und diese Schätzung nutzt, um die Störungen abzuziehen (Addierglied A) bzw. im Rahmen der SINR Schätzung zu berücksichtigen (Verbindungsleitung UD zur SINR estimation SE).

Durch die erfindungsgemäße Empfängerstruktur wird die Bitfehler- und Paketfehlerrate herab gesetzt bzw. bei gleicher Bitfehler-/Paketfehlerrate kann eine niedrigere Sendeleistung verwendet werden oder bei gleicher Sendeleistung können stärkere Störungen bzw. ein kleinerer Störabstand (beim Stand der Technik mindestens 45 nm (Nautische Meile)) zugelassen werden.

Das erfindungsgemäße Filter Bank Pulse Blanking-Verfahren FBPB leidet an hoher Komplexität, da die Filteroperationen M mal angewandt werden müssen. Selbst mit einer effizienten Polyphasenstruktur bleibt die Komplexität hoch.

Um die Komplexität der Interferenzunterdrückung zu reduzieren, kann für die frequenzselektive Aufteilung statt dem Filter Bank Pulse Blanking-Verfahren FBPB ein blockbasiertes Verfahren verwendet werden, welches überlappende, Hann-gefensterte Zeitblöcke mit Hilfe einer schnellen Fourier-Transformation FFT in den Frequenzbereich transformiert und dort die betroffenen Frequenzanteile unterdrückt. Dabei ist eine Anpassung der OFDM-Komponenten nicht möglich, da die eingebrachten ICI analytisch nicht so einfach berechnet werden kann.

Um die spektrale Deformation der Impulsstörung zu vermeiden, wird im Folgenden ein neues Verfahren gemäß der Erfindung beschrieben, das eine Hann-Fensterung verwendet und die Interferenzunterdrückung im Frequenzbereich mit Hilfe einer komplexitätsreduzierten Blockstruktur macht. Dies wird nachfolgend als block based frequency interference mitigation Verfahren BBFIM bezeichnet. Dabei wird erfindungsgemäß eine FFT der Länge M auf die Blöcke der Länge M im Zeitbereich angewandt, die DME-Störung dann im Frequenzbereich unterdrückt und schließlich das Zeitsignal durch eine inverse schnelle Fourier-Transformation (Inverse Fast Fourier Transformation) IFFT wieder gewonnen. Die Bestimmung von M stellt einen Zielkonflikt zwischen Frequenz- und Zeitselektivität dar.

Anstelle des unflexiblen OFDM-Fensters mit einer Länge eines OFDM-Symbols als Block, wird erfindungsgemäß die Länge des Fensters reduziert und die DME-Unterdrückung vorgezogen, wie in FIG. 7 zu sehen ist. Der Unterdrückungsprozess wird im Frequenzbereich angewandt. In K. Kammeyer, K. Kroschel, "Digitale Signalverarbeitung", Vieweg+Teubner Verlag, 7. Auflage, 2009, wird eine ähnliche Struktur für die Anwendung einer effizienten Filterung mit einer gewichteten Overlap-Add-Methode verwendet. Anstatt der FFT einer finiten Impulsantwort wird bei BBFIM eine Spektralanalyse mit der Interferenzunterdrückung kombiniert. Dies kann als zeitvariante Filterung im Frequenzbereich verstanden werden.

Zuerst wird das gefilterte und abgetastete Empfangssignal in sich überlappende Blöcke mit Index b und Länge M aufgeteilt, wobei die Anzahl der sich überlappenden Abtastwerte bei M/2 liegt:

$$r_b[n'] = r[n' + b \cdot M/2] \tag{35}$$

mit $b \in \{0, 1, 2, ...\}$ und $n' \in \{0, 1, 2, ..., M - 1\}$.

Die Blöcke werden dann mit einem Hann-Fenster gefenstert:

$$r_b^{\mathrm{w}}[n'] = r_b[n'] \cdot w_{\mathrm{Hann}}[n'] \tag{36}$$

mit

$$w_{\mathrm{Hann}}[n'] = \begin{cases} \frac{1}{2}(1 - \cos(\frac{2\pi}{M}n')) & \text{if } 0 \leq n' < M \\ 0 & \text{else} \end{cases} \tag{37}$$

Wenn der Grad der Überlappung auf 50% gesetzt wird, erfüllt ein Hann-Fenster die Eigenschaft, dass die Summe der gefensterten Teile dem ursprünglichen Signal. Wenn andere Überlappungsgrade gewählt werden kann ein modifiziertes Fenster verwendet werden.

Bei dieser erfindungsgemäßen Fensterung wird die spektrale Form der DME-Impulse nur leicht verändert. FIG. 8 zeigt eine ungefensterte, eine Rechteck-, sowie eine Hanngefensterte Version eines DME-Signals. Der DME-Doppelimpuls wird durch das Rechteckfenster abgeschnitten. Dagegen zerstört das Hann-Fenster keineswegs die Gaußförmige Form des DME-Impulses.

FIG. 9 zeigt das Leistungsdichtespektrum dieser Signale. Es ist außerdem erkennbar, dass alle Frequenzen durch DME gestört sind, wenn ein Rechteckfenster eingesetzt wird. Das Hann-gefensterte Signal hingegen leidet nicht unter dem Abschneiden des DME-Impulses. Daher wird die frequenzselektive Interferenzunterdrückung durch die Verwendung eines Hann-Fensters verbessert. Nach der Fensterung wird jeder Block mittels FFT der Länge M in den Frequenzbereich transformiert.

$$R_b[k] = \text{FFT}_M\{r_b^{\text{w}}[n']\}$$

(38)

Nun wird die impulsartige, frequenzselektive durch Nullsetzen der FFT-Ausganswerte an den Stellen unterdrückt, wo die DME-Störung (Interferenz) detektiert wurde. Eine einfache Implementierung ist erneut die Power-Detektion, bei der die Werte zu Null gesetzt werden, deren Energien am Ausgang der FFT einen bestimmten Wert übersteigen:

$$R_b^{\text{IM}}[k] = \begin{cases} R_b[k], & \text{if } R_b[k] < \Theta \cdot \bar{P}[k] \\ 0, & \text{else} \end{cases}$$

(39)

Der Schwellenwert θ ist erneut der bestimmende Parameter und $\bar{P}[k]$ steht für den Erwartungswert der L-DACS1-Signalenergie auf der Frequenzposition k. Eine Untersuchung einer Wahl für Θ wird noch nachfolgend beschrieben. Danach, wird eine IFFT angewandt, um das Zeitsignal für jeden Block wieder zu erhalten:

$$r_b^{\text{IM}}[n'] = \text{IFFT}_M\{R_b^{\text{IM}}[k]\}$$

(40)

Da sich die Blöcke überlappen, müssen die Werte im Zeitbereich ebenfalls überlappend aufsummiert werden:

$$r[n]^{\text{IM}} = \sum_{b=-\infty}^{\infty} r_b^{\text{IM}}[n - b \cdot M/2]$$

(41)

In der Praxis wird durch die 50% Überlappung der Blöcke (siehe FIG. 7) bei der Summenbildung gemäß Gleichung (41) der Vorgängerblock und der Nachfolgerblock berücksichtigt werden (siehe auch Gleichung (35)). Die Kombination einer Hann-Fensterung und einer FFT-Blockverarbeitung ist die erfindungsgemäße Lösung der Schlüssel, um Interferenzunterdrückung bei L-DACS1 mit einer begrenzten Komplexität zu realisieren. Ein Tiefpassfilter kann ebenfalls weggelassen werden, da die DME-Störung frequenzselektiv unterdrückt wird. Der Zielkonflikt zwischen der Auflösung in Zeit- und Frequenzbereich wird durch die Wahl einer geeigneten Fenstergröße M erzielt.

Um die Rechenkomplexität zu untersuchen wird die Anzahl an komplexen Multiplikationen (CM) pro OFDM-Symbol untersucht. Die Signale werden in einem Frequenzband von 2,5MHz empfangen, wobei sich L-DACS 1 in der Mitte des Spektrums befindet, vgl. FIG. 8. Eine FFT der Länge 256 wird für die OFDM-Demodulation verwendet. Da das Guard-Intervall 44 zusätzliche Werte enthält, müssen 300 Werte pro OFDM-Symbol verarbeitet werden. M/2 ·

$\log_2(M/2)$ CM sind notwendig, um eine FFT der Länge M zu berechnen, siehe K. Kammeyer, K. Kroschel, "Digitale Signalverarbeitung" a.a.O. ICI-Unterdrückung wird hier nicht betrachtet.

In Tab. I sind die Rechenkomplexitäten der vier Verfahren hinsichtlich der Anzahl an CM pro OFDM-Symbol gezeigt, sortiert in ansteigender Reihenfolge.

Tab. I Rechenkomplexitäten

| approach | #CM | additional complexity |
|---|---|---|
| BBFIM | 3600 | |
| SPB | 19200 | |
| CPB | 20096 | combination unit |
| FBPB | 38400 | |

Vor Simple Pulse Blanking SPB und Combination Pulse Blanking CPB muss ein Tiefpassfilter eingefügt werden. Wenn man von einer Filterordnung der Größe 64 ausgeht sind $300 \cdot 64 = 19200$ CM pro OFDM-Symbol notwendig. Dabei ist die Komplexität des Filters natürlich skalierbar. Eine zusätzliche FFT der Länge 256 für das CPB benötigt $256/2 \cdot \log_2\{256/2\} = 896$ CM.

Nachfolgend wird gezeigt, dass hinsichtlich Interferenzunterdrückung 32 Subbänder das beste Resultat erzielen. Für die Wahl der Anzahl an Subbändern (FBPB) bzw. Blockgröße (BBFIM) wird eine Analyse gemacht. Dabei wird die Bitfehlerrate (BER) vor der Kanaldecodierung für verschiedene DME-Levels hinsichtlich effektiver TACAN/DME-Stationen gemacht, wobei eine effektive TACAN/DME-Station für eine Duty-Cycle von 3600 Pulspaaren pro Sekunde (ppps) steht. Interferenzen von TACAN-Stationen werden in den Simulationen betrachtet, da dies der Worst-Case ist. Die DME-Doppelimpulse sind zufällig in der Zeit verteilt und sind gleich auf die Trägerfrequenzen $\pm 500$ kHz verteilt. Die Spitzenleistung der DME-Impulse beträgt -60 dBm. Die höchst mögliche TACAN-Pulsamplitude wird verwendet.

Ein $E_b/N_0$-Wert von 10 dB wird im Folgenden angenommen. Nimmt man den Link-Budget von L-DACS1 zugrunde, siehe auch M. Sajatovic, B. Haindl, U. Epple, T. Gräupl, "Updated LDACS1 System Specification" a.a.O., so ist dies äquivalent zu einem mittleren Empfangspegel von -99.0 dBm im Flugmodus en-route, d.h. in der Luft.

Es gilt perfekte Interferenzdetektion, d.h. das Signal ist dann zu Null gesetzt, wenn die Momentanleistung von DME die von L-DACS 1 überschreitet. Dies ist Genie-Wissen und dem Empfänger in der Praxis nicht bekannt, soll aber für diese Analyse hinreichend sein.

In FIG. 13 wird die Leistungsfähigkeit bei verschiedenen Werten für die Anzahl an Subbändern für FBPB gezeigt. Das schlechteste Ergebnis wird bei 8 Subbändern erzielt. Erhöht man die Zahl an Subbändern auf 32, so sinkt die BER. Ein Leistungsverlust wird bei mehr als 32 Subbändern beobachtet. Erhöht man die Zahl an Subbändern, so sinkt die Bandbreite der Subbandfilter, jedoch verlängert sich die Impulsantwort im Zeitbereich und das DME-Signal wird immer stärker zeitlich verschmiert. Im Folgenden werden 32 Subbänder verwendet, da diese die besten Ergebnisse für alle DME-Levels liefert.

In FIG. 14 wird die Performance für verschiedene Blockgrößen bei BBFIM gezeigt. Das beste Ergebnis liefert eine Blockgröße von 64. Wird die Blockgröße reduziert, so erhöht sich die Frequenzselektivität, wird hingegen die Blockgröße erhöht, so steigt die Zeitselektivität. Im Folgenden wird eine Blockgröße von 64 gewählt.

Als Prototyp-Filter wird bei FBPB ein Raised-Cosine Filter mit der Ordnung 64, sowie 32 Subbänder verwendet. Dies führt zu $300 \cdot 64 = 19200$ CM für die Fensterung eines jeden Abtastwertes und zu $300 \cdot 32/2 \cdot \log_2\{32/2\} = 19200$ CM für die FFT. Mit diesen Werten ist die Komplexität von FBPB (38400 CM) ungefähr zweimal so hoch wie für SPB. Dieses Parameter-Set wird ebenfalls für die nachfolgend beschriebene Leistungsanalyse verwendet.

Die Blockgröße bei BBFIM ist auf 64 gesetzt, da dies die besten Resultate erzielt. Die Fensterung benötigt $2 \cdot 300 = 600$ CM. Eine FFT und eine IFFT der Länge 64 schlägt mit $64/2 \cdot \log_2\{64/2\} = 160$ CM zu buche. In einem OFDM-Symbol stecken durchschnittlich $(2 \cdot 300)/64 = 9.375$ Blöcke. Das heißt, in Summe benötigt BBFIM $600 + 2 \cdot 1500 = 3600$ CM.

BBFIM weist die geringste Komplexität auf, gefolgt von SPB, dessen Komplexität ungefähr 5-mal höher ausfällt. Die Komplexität von FBPB liegt bei ungefähr zweimal höher als bei SPB. CPB benötigt die zusätzliche Kombinations-Einheit, deshalb leidet es an zusätzlicher Komplexität.

Die Unterdrückungsleistungsfähigkeit aller vorgestellten Verfahren hängt sehr stark von der Interferenzdetektion ab. Die Detektion ist für die vorgeschlagenen Ansätze leichter, da sie auf den Subbändern (FBPB) bzw. FFT-Ausgangswerten (BBFIM) angewandt werden kann, an denen hauptsächlich DME-Leistung anliegt. Dies ist bei SPB und CPB nicht der Fall, daher ist auszugehen, dass in praktischen Systemen die Leistungsfähigkeit von Simple Pulse Blanking SPB und CPB noch weiter abfällt verglichen mit FBPB und BBFIM.

In den Simulationen sind die Schwellwertentscheidungen, siehe beispielsweise S. Brandes, S. Gligorevic, M.

Ehammer, T. Gräupl, R. Dittrich, "Expected B-AMC System Performance" a.a.O., durch folgende Genie-basierte Entscheidungsregel ersetzt: Jeder Empfangswert wird geblankt, wenn die Momentanleistung von DME auf diesem Abtastwert höher als die mittlere Leistung von L-DACS auf diesem Abtastwert.

Um den Kombinationsschritt bei CPB anzuwenden wird eine Schätzung der SINR-Werte auf den Subträgern in beiden Pfaden vorher gemacht. Eine Kombination kann dann via Maximum-Ratio-Combining realisiert werden. In den Simulationen wird Genie-Wissen genutzt. In praktischen Systemen führt eine Schätzungenauigkeit der SINR Werte zu einem Leistungsverlust.

Die Gesamtleistungsfähigkeit des Systems hängt nur von der Anzahl der verlorenen Pakete ab. Deshalb wird die Paketfehlerrate (PER) nach der Decodierung betrachtet, siehe M. Sajatovic, B. Haindl, U. Epple, T. Gräupl, "Updated LDACS1 System Specification" a.a.O., wobei 728 Informationsbits ein Paket bilden. Diese Bits werden mit einer Coderate von 0.45 codiert und mit QPSK moduliert. Dies ist das robusteste Modulations- und Codierschema von L-DACS1. Ein L-DACS1 Datenrahmen besteht aus 54 OFDM-Symbolen und trägt 3 Pakete. Die Zielpaketfehlerrate von L-DACS 1 liegt bei 0.01. Diese Gütezahl ist eine bessere Wahl verglichen mit der Bitfehlerrate, da die Leistungsfähigkeit des Gesamtsystems nur von der Anzahl der verlorenen Pakete abhängt.

Vor allem die Frequenzpläne von DME- und L-DACS 1-Stationen bestimmen den Interferenzeinfluss. Anstatt einen Frequenzplan anzunehmen, wird im Folgenden ein Modell verwendet, das nur hinsichtlich der Anzahl an DME-Stationen, den Trägerfrequenzen und den Empfangsleistungen variiert. Eine Überlagerung vieler DME-Stationen wird in jeder Simulation angenommen. Die Simulationsparameter für DME-Stationen sind in den Tabellen II und III für moderate und ein starke DME-Interferenz gezeigt.

Tabelle II moderate DME-Interferenz

| Δ center freq. | duty cycle | distance | peak received power |
|---|---|---|---|
| -500 kHz | 2 · 3600 ppps | 26 km | -60 dBm |
| -500 kHz | 2 · 3600 ppps | 270 km | -70 dBm |
| +500 kHz | 2 · 3600 ppps | 26 km | -60 dBm |
| +500 kHz | 2 · 3600 ppps | 270 km | -70 dBm |

Die DME-Simulationsparameter sind Trägerfrequenz relativ zur L-DACS 1 Trägerfrequenz, die Duty-Cycle der DME-Doppelimpulse in ppps und die Spitzenleistung des Empfangspegels von DME in dBm.

Es gilt ein $E_b/N_0$-Wert von 4.6 dB. Nimmt man das Link-Budget von L-DACS 1 zugrunde, siehe M. Sajatovic, B. Haindl, U. Epple, T. Gräupl, "Updated LDACS1 System Specification" a.a.O., so ist dies äquivalent zu einem Empfangspegel von -104.4 dBm in Flugmodus en-route.

In FIG. 15 wird die BER vor der Kanaldecodierung für FBPB (M = 32) für verschiedene Werte des Power Detection Parametrs $\theta$ bei verschiedenen Anzahl an effektiven DME-Stationen gezeigt. Wenn keine DME-Störung aktiv ist, so ist ein $\theta \geq 10$ vorteilhaft, wenn die Anzahl an DME-Stationen bei 10 liegt, so ist der beste Wert bei 8, gefolgt von 10. Daher ist ein Wert von $\theta = 10$ ein guter Wert.

Die schlimmste Interferenz wird an L-DACS-Flugzeugen erwartet, daher wird nur der FL simuliert. Weiterhin wird von Interferenz von TACAN-Stationen mit der höchst möglichen Puls-Amplitude und Duty Cycle ausgegangen, weil dies der Worst-Case ist. Nimmt man den Link- Budget von L-DACS zugrunde, siehe M. Sajatovic, B. Haindl, U. Epple, T. Gräupl, "Updated LDACS1 System Specification" a.a.O., so, entspricht ein $E_b/N_0$ Wert von 6.0 dB einem mittleren Empfangspegel von -103.0 dBm im Flugmodus en-route.

In FIG. 16 wird die Paketfehlerrate von einem Szenario ohne DME-Interferenz und für verschiedene $E_b/N_0$-Werte gezeigt. Ein Schwellwert $\theta \geq 10$ ist notwendig, um den Einfluss von Interferenzunterdrückung zu limitieren, wenn keinerlei Störung anliegt. Es ist bemerkenswert, dass die PER-Kurve von $\theta \geq 12$ die Kurve von geniebasierter DME-Detektion unterschreitet. Das liegt daran, dass verrauschte aber interferenzfreie Abtastwerte zu Null gesetzt werden, was vorteilhaft ist.

In FIG. 17 ist ein Szenario mit moderater DME-Störung gezeigt. Das beste Resultat erzielen Schwellwerte von 8, 10 und 12.

Bei starker DME-Störung, vgl. FIG. 18, ist ein Schwellwert von 6 der beste, gefolgt von einem Wert von 8.

Tabelle IV gibt einen Überblick über den Verlust bei verschiedenen Schwellwerten, wenn man eine PER von 1% anstrebt. Wenn der Fokus auf einen Empfang bei Szenerien mit wenig DME-Störung liegt, so sollte ein Schwellwert von 10 gewählt werden. Bei starker Störung sinkt der zu wählende Parameter auf 8.

Tabelle IV Verlust in dB bei verschiedenen Schwellwerten, verglichen mit dem besten Schwellenwert PER = 1%

| ↓ scenario, → $\theta$ | 4 | 6 | 8 | 10 | 12 | 14 |
|---|---|---|---|---|---|---|
| no DME | fail | 0.5 | 0.12 | 0.04 | 0 | 0 |
| moderate DME | fail | 0.45 | 0 | 0 | 0 | 0.1 |
| heavy DME | 1.4 | 0 | 0.15 | 0.5 | 0.7 | 1.0 |

In FIG. 19 wird die BER vor der Decodierung von BBFIM (M = 64) für verschiedene Schwellwerte $\Theta$ mit variierender effektiver Anzahl an DME-Stationen gezeigt. Wenn kein DME aktiv ist, so ist ein $\Theta \geq 12$ vorteilhaft. Bei einer effektiven Anzahl von 10 DME-Stationen erzielen die Werte 10 und 12 die besten Resultate.

FIG. 20 zeigt die PER für starke DME-Interferenz Auch hier ist der beste Schwellwert 10, gefolgt von 12,2.

Tabelle V gibt einen Überblick des Verlustes bei Verwendung von verschiedenen Schwellwerten und einer PER von 1 %.

Tabelle V Verlust in dB bei verschiedenen Schwellwerten, verglichen mit dem besten Schwellenwert PER = 1 %

| ↓ scenario, → $\Theta$ | 4 | 6 | 8 | 10 | 12 | 14 |
|---|---|---|---|---|---|---|
| no DME | fail | fail | 0.5 | 0.18 | 0.05 | 0 |
| moderate DME | fail | 1.0 | 0.3 | 0.1 | 0 | 0 |
| heavy DME | fail | 0.9 | 0.15 | 0 | 0.15 | 0.3 |

Ein fester Schwellwert von 12 ist ein guter Kompromiss, da die Leistungsfähigkeit bei moderater DME-Störung die beste ist und sie bei starker DME-Störung nahe an der Leistungsfähigkeit vom optimalen Schwellwert liegt.

In FIG. 21 wird nochmal ein Überblick der PER-Kurven für die drei DME-Szenarien gegeben, wenn die Werte $\theta$ = 10 und $\Theta$ = 12 verwendet werden.

In FIG. 10 wird das PER für variierende Anzahl an ppps gezeigt. Die Spitzenleistung des DME-Empfangssignals liegt bei -60 dBm. Die Frequenzoffset der DME-Kanäle sind gleichverteilt bei $\pm$0.5MHz. Die Position $t_0$ der DME-Impulse ist zufällig. Nimmt man eine Zielfehlerrate von 0.01 zu Grunde, versagt FBPB nicht unter einer Duty Cylce von 10000 ppps, gefolgt von BBFIM mit 6000 ppps. CPB und SPB versagen bereits bei einer Duty Cycle von 2500 ppps und 1500 ppps.

Dabei wird ein Worst-Case-DME-Szenario angenommen, um die Robustheit der Verfahren zu zeigen, siehe nachfolgende Tab. III.

Tabelle III starke DME-Interferenz

| $\Delta$ center freq. | duty cycle | distance | peak received power |
|---|---|---|---|
| -500 kHz | 3600ppps | 26 km | -50 dBm |
| -500 kHz | 2 · 3600 ppps | 26 km | -60 dBm |
| -500 kHz | 4 · 3600 ppps | 270 km | -70 dBm |
| +500 kHz | 3600 ppps | 26 km | -50 dBm |
| +500 kHz | 2· 3600 ppps | 84 km | -60 dBm |
| +500 kHz | 4· 3600 ppps | 270 km | -70 dBm |

Die DME-Simulationsparameter sind wie folgt: Trägerfrequenzen relativ zu der Trägerfrequenz von L-DACS 1, die Duty-Cycle der DME-Doppelimpulse in ppps, der Abstand zwischen DME-Bodenstation und LDACS-Empfänger auf dem Flugzeug und die Spitzenleistung der Empfangssignale in dBm. Der Luftfahrt-Funkkanal ist ebenso gültig für das DME-Signal. Daher wird dasselbe en-route Kanalszenario für DME-Signale angewandt, d.h. die Echo-Pfade werden ebenfalls empfangen.

FIG. 11 zeigt die Robustheit für variierende $E_b/N_0$-Werte. Der Verlust von FBPB und BBFIM zum interferenzfreien Fall liegt für eine PER von 0.01 bei ungefähr 2 dB und 3 dB. Der Abstand zu CPB ist bei fast 6 dB, da CPB enorm unter der spektralen Spreizung der DME-Impulse leidet. Simple Pulse Blanking SPB versagt komplett, da das eingebrachte ICI zu hoch ist.

Das erfindungsgemäße Filter-Bank-Pulse-Blanking-Verfahren FBPB mit subbandselektivem Pulse-Blanking hat die beste Leistungsfähigkeit unter allen betrachteten Interferenzunterdrückungsverfahren. Insbesondere wird eine Filter-Bank mit frequenzselektiven Pulse-Blanking in den Subbändern genutzt, wobei 32 Subbänder das beste Ergebnis hinsichtlich BER erzielen, wenn ein einem L-DACS 1-Empfänger mit DME-Störung eine Bandbreite von 2.5 MHz verwendet wird, was einen Subbandabstand von 78.125 kHz entspricht. In Kombination mit Pulse-Blanking und Power-Detektion erzielt ein fester Power- Detektions-Schwellwert im Bereich 10-12 gute Resultate für sämtliche DME-Impulshäufigkeiten; nachteilig ist einer hohen Komplexität.

Das zweite erfindungsgemäße blockbasierte frequenzselektive Verfahren BBFIM zur Interferenzunterdrückung bietet die zweitbeste Interferenzunterdrückung und besitzt die geringste Komplexität. Insbesondere wird eine effiziente Blockverarbeitung mit einer Hann-Fensterung kombiniert. Das beste Resultat erzielt eine Blockgröße von 64, wenn ein einem L-DACS 1-Empfänger mit DME-Störung eine Bandbreite von 2.5 MHz verwendet wird. Es kann ebenfalls mit Power-Detektion kombiniert werden mit einem optimalen Schwellwert von 12 für sämtliche DME-Impulshäufigkeiten Deshalb ist es die beste Wahl, wenn niedrige Komplexität gefordert ist.

Die Erfindung ist nicht auf die dargestellten und beschriebenen Ausführungsbeispiele beschränkt, sondern umfasst auch alle im Sinne der Erfindung gleichwirkenden Ausführungen.

**Patentansprüche**

1. Verfahren zur Verringerung der Störeinflüsse von pulsförmigen Störsignalen bei einer OFDM-basierten Datenübertragung in einem von einem Empfänger empfangenen Mehrträgerfrequenzsignal mit einzelnen Trägerfrequenzen zugeordneten modulierten Daten und überlagerten pulsförmigen Störsignale, bei dem:

    a) im Empfänger die pulsförmigen Störsignale im modulierten OFDM-basiertes Signal detektiert werden,
    b) zur Ausblendung eines pulsförmigen Störsignals im Empfangssignal, dieses mit einer Fensterfunktion multipliziert wird,
    c) die Fensterfunktion - im Zeitbereich als kontinuierliche Funktion betrachtet - differenzierbar ist,
    d) das mit der Fensterfunktion multiplizierte Übertragungssignal nach einer Übertragungskanalschätzung und Signalentzerrung dekodiert wird,
    e) bei einer Übertragungskanalschätzung der Daten, die den einzelnen Trägerfrequenzen jeweils zugeordnet sind, ein Zuverlässigkeitswert zugeordnet wird, der beschreibt, wie glaubwürdig die empfangenen oder geschätzten Daten sind und
    f) der Zuverlässigkeitswert für diejenigen Daten, die den von einem pulsförmigen Störsignal betroffenen Trägerfrequenzen zugeordnet sind, vor der Dekodierung im Empfänger jeweils auf null gesetzt wird,

**dadurch gekennzeichnet, dass** ein Filter-Bank-Pulse-Blanking-Verfahren FBPB vorgesehen ist, bei dem
ein abgetastetes Empfangssignal (r) einer blanking unit (BU) zum frequenzselektiven Pulse-Blanking zugeführt wird, welche aus einer Analyse-Filter-Bank (AFB) mit M Subbändern, einem mit der Analyse-Filter-Bank (AFB) verbundenen Modul zum frequenzselektiven Pulse-Blanking der Subband-Signale (PBS) und einer mit dem Modul verbundenen Synthese-Filter-Bank (SFB), welche das Signal wieder zusammenfügt, besteht,

    - die Analyse-Filter-Bank (AFB), welche das Empfangssignal (r) in mehrere Subbänder frequenzselektiv zerteilt, vor einer mit dem Ausgang der blanking unit (BU) verbundenen OFDM-Fensterung (DFT) eingesetzt wird, derart, dass durch die Subbandzerlegung Pulse-Blanking subbandselektiv angewandt und sowohl die OFDM-Demodulation als auch die Kanaldecodierung angepasst wird,
    - die Detektion einer Störung in einer mit der Analyse-Filter-Bank (AFB) verbundenen detection unit (DU) in den Subbändern subbandselektiv erfolgt und
    - eine mit dem Modul zum frequenzselektiven Pulse-Blanking der Subband-Signale (PBS) verbundene blanking mitigation unit (BMU) zur Anpassung an eingebrachte Störungen durch Pulse-Blanking und eine mit der blanking mitigation unit (BMU) verbundene Inter-Carrier-Interferenzen Inter-Subträger-Interferenzen ICI cancellation unit (ICU) zur Beseitigung der eingebrachten Störung durch Pulse-Blanking vorgesehen sind.

2. Verfahren nach Anspruch 1, **dadurch gekennzeichnet, dass**

    - das Ausgangssignal der blanking mitigation unit (BMU) einem Modul (CE) zur Kanalschätzung anhand von Pilotwerten,
    - einem Modul (IE) der ICI cancellation unit (ICU) zur Einstufung von Symbole, bei denen eine ICI-Störung geschätzt wurde, als unzuverlässig,

- und einem blanking equalization Modul (BE) zur Entzerrung der Werte nach der OFDM-Fensterung (DFT) zugeführt wird.

3. Verfahren nach dem Oberbegriff des Anspruch 1, **dadurch gekennzeichnet, dass** ein blockbased-frequency-interference-mitigation Verfahren BBFIM vorgesehen ist, bei dem eine schnelle Fourier-Transformation FFT der Länge M auf die Blöcke der Länge M im Zeitbereich angewandt, eine Distance Measuring Equipment-DME-Störung dann im Frequenzbereich unterdrückt und schließlich das Zeitsignal durch eine inverse schnelle Fourier-Transformation IFFT wieder gewonnen, wobei eine Hann-Fensterung oder ein anderes Nyquist-Fenster mit weicher Flanke verwendet wird und die Interferenzunterdrückung im Frequenzbereich erfolgt, derart, dass eine Spektralanalyse mit der Interferenzunterdrückung kombiniert und eine zeitvariante Filterung im Frequenzbereich erfolgt, indem ein gefiltertes und abgetastetes Empfangssignal in sich überlappende Blöcke mit Index b und Länge M aufgeteilt wird, wobei die Anzahl der sich überlappenden Abtastwerte bei M/2 liegt:

$$r_b[n'] = r[n' + b \cdot M/2] \tag{35}$$

- mit b $\varepsilon$ {0, 1, 2, ...} und n' $\in$ {0, 1, 2, ..., M - 1}, dass die Blöcke dann mit einem Hann-Fenster gefenstert werden:

$$r_b^{\mathrm{w}}[n'] = r_b[n'] \cdot w_{\mathrm{Hann}}[n'] \tag{36}$$

mit

$$w_{\mathrm{Hann}}[n'] = \begin{cases} \frac{1}{2}(1 - \cos(\frac{2\pi}{M}n')) & \text{if } 0 \leq n' < M \\ 0 & \text{else} \end{cases} \tag{37}$$

und dass bei der Wahl eines anderen Nyquist-Fensters, die Anzahl der sich überlappenden Abtasteten so gewählt wird, dass sich die Summe der zeitlich verschobenen Nyquist-Fenster zum Wert 1 aufsummiert.

4. Verfahren nach Anspruch 3, **dadurch gekennzeichnet, dass** nach der Fensterung jeder Block mittels FFT der Länge M in den Frequenzbereich gemäß Gleichung (38) transformiert wird:

$$R_b[k] = \mathrm{FFT}_M\{r_b^{\mathrm{w}}[n']\} \tag{38}$$

dass durch Nullsetzen der FFT-Ausgangswerte gemäß Gleichung (39) die DME-Störung an den Stellen unterdrückt wird, wo diese detektiert wurden, indem die Werte zu Null gesetzt werden, deren Energien am Ausgang der FFT einen bestimmten Wert übersteigen:

$$R_b^{\mathrm{IM}}[k] = \begin{cases} R_b[k], & \text{if } R_b[k] < \Theta \cdot \bar{P}[k] \\ 0, & \text{else} \end{cases} \tag{39}$$

dass danach eine IFFT gemäß Gleichung (40) angewandt wird, um das Zeitsignal für jeden Block wieder zu erhalten:

$$r_b^{\mathrm{IM}}[n'] = \mathrm{IFFT}_M\{R_b^{\mathrm{IM}}[k]\} \quad (40)$$

und dass die Werte im Zeitbereich überlappend aufsummiert werden:

$$r[n]^{\mathrm{IM}} = \sum_{b=-\infty}^{\infty} r_b^{\mathrm{IM}}[n - b \cdot M/2]$$

$$(41)$$

derart, dass durch die 50% Überlappung der Blöcke bei der Summenbildung gemäß Gleichung (41) der Vorgängerblock und der Nachfolgerblock berücksichtigt werden.

5. Empfänger zur Durchführung der Verfahren nach Patentanspruch 1 oder 3, **dadurch gekennzeichnet, dass** das abgetastete Empfangssignal (r) einer blanking unit (BU) zum frequenzselektiven Pulse-Blanking zugeführt wird, welche aus einer Analyse-Filter-Bank (AFB) mit M Subbänder, einem Modul zum frequenzselektiven Pulse-Blanking der Subband-Signale (PBS) und einer Synthese-Filter-Bank (SFB), welche das Signal wieder zusammenfügt, besteht, dass zur Detektion einer Störung in den Subbändern die blanking unit (BU) mit einer detection unit (DU) und zur Anpassung an eingebrachte Störungen durch Pulse-Blanking die blanking unit (BU) mit einer blanking mitigation unit (BMU) verbunden ist.

6. Empfänger nach Patentanspruch 5, **dadurch gekennzeichnet, dass** die blanking mitigation unit (BMU) mit einer ICI cancellation unit (ICU) verbunden ist, dass zur Einstufung von Symbole, bei denen eine hohe ICI-Störung geschätzt wurde, als unzuverlässig die ICI cancellation unit (ICU) ein Modul zur ICI-Schätzung (IE), ein Modul zur Kanalmultiplikation (ICM) und ein Modul zur Kanalcodierung (ICE) aufweist, wobei das Ausgangssignal eines DFT-Moduls (BDFT) der blanking mitigation unit (BMU) dem Modul (IE) der ICI cancellation unit (ICU), einem Modul zur SINR-Schätzung (SE), welches zur Kanalschätzung anhand von Pilotwerten mit einem Modul zur Kanalschätzung (CE) verbunden ist, und einem blanking equalization Modul (BE) der blanking mitigation unit (BMU) zur Entzerrung der Werte nach der DFT zugeführt ist.

7. Empfänger nach Patentanspruch 6, **dadurch gekennzeichnet, dass** zur weiteren Verbesserung der Empfangsqualität und Implementierung einer ICI-Auslöschung, eine iterative Rückführung vorgesehen ist, die ein vermutetes Sendesignal (SRS) aus dem letzten Decodierergebnis über eine Verbindungsleitung vom Modul zur Kanaldecodierung (CD), Modul zur Kanalschätzung (CE) und Modul zur Kanalmultiplikation (ICM) rekonstruiert, daraus die tatsächlichen Störungen mittels der ICI cancellation unit (ICU) im Nutzsignal schätzt und diese Schätzung nutzt, um die Störungen mittels einem mit der OFDM-Fensterung (DFT), dem Modul zur ICI-Schätzung (IE) und dem blanking equalization Modul (BE) verbundenen Addierglied (A) abzuziehen oder im Rahmen der SINR Schätzung über eine Verbindungsleitung (UD) vom Modul (IE) zum Modul zur SINR-Schätzung (SE) berücksichtigt.

**Claims**

1. A method for reducing the interference of pulse-shaped interference signals in an OFDM-based data transmission of a multi-carrier frequency signal received by a receiver with modulated data associated with individual carrier frequencies and superimposed pulse-shaped interference signals, whereby:

   a) the pulse-shaped interference signals in the modulated OFDM-based signal are detected in the receiver ,
   b) for the suppression of a pulse-shaped interference signal in the receive signal, this is multiplied by a window function,
   c) the window function -considered in the time domain as a continuous function-is differentiable,
   d) the transmission signal multiplied by the window function is decoded after a transmission channel estimation and signal equalization,
e) in a transmission channel estimate of the data associated with the individual carrier frequencies, a reliability value is assigned describing how credibly the received or estimated data are, and
f) the reliability value for those data associated with the carrier frequencies affected by a pulse interference signal is set to zero before decoding in the receiver,

**characterized in that** a filter bank pulse blanking method FBPB is provided, whereby:

- a sampled receive signal (r) is supplied to a blanking unit (BU) for frequency-selective pulse blanking, which comprises an analysis filter bank (AFB) with M subbands, a module for frequency-selective sub-band pulse blanking (PBS) connected with the analysis filter bank (AFB) and a synthesis filter bank (SFB) connected with the module, which reassembles the signal,
- the analysis filter bank (AFB), which divides frequency-selectively the receive signal (r) into a plurality of sub-bands is used before an OFDM windowing (DFT), which is connected with the exit of the blanking mitigation unit (BU), such that by the subband dividing Pulse Blanking is applied subband-selective and adapted to both the OFDM-demodulation and the channel-decoding,
- the detection of a disturbance in a detection unit (DU) connected with the analysis filter bank (AFB) takes place subband-selectively in the subbands,
- a blanking mitigation unit (BMU), connected with the module for frequency-selective sub-band pulse blanking (PBS), for adaptation to introduced interference by pulse blanking and an inter-carrier interference ICI cancellation unit (ICU), connected with the blanking mitigation unit (BU), for elimination the introduced interference is provided by pulse blanking.

2. Method according to claim 1 **characterized in that:**

- the output signal of the blanking mitigation unit (BMU) is fed to a module (CE) for channel estimation based on pilot values,
- is fed to a module (IE) of the ICI cancellation unit (ICU) for the classification of symbols as to be unreliable in which a high ICI disturbance was estimated, and
- is fed to a blanking equalization module (BE) for equalization of values after OFDM windowing (DFT).

3. Method according to the preamble of claim 1, **characterized in that** a block-based frequency interference mitigation method BBFIM is provided, whereby a fast Fourier transform FFT of length M is applied to the blocks of length M in the time domain, a distance Measuring Equipment DME then suppresses interference in the frequency domain and finally the time signal is recovered by an inverse fast Fourier transform IFFT using a Hann windowing or another Nyquist soft edge window and the interference suppression in the frequency domain is done such a spectral analysis is combined with the interference suppression and a time-variant filtering in the frequency domain is used, whereby a filtered and sampled received signal is split into overlapping blocks of index b and length M, whereby the number of overlapping samples at M / 2 being:

$$r_b[n'] = r[n' + b \cdot M/2] \tag{35}$$

with $b \in \{0, 1, 2,. , , \}$ and $n' \in \{0, 1, 2,. , , , M - 1\}$ that the blocks will then be windowed with a Hann window:

$$r_b^w[n'] = r_b[n'] \cdot w_{\text{Hann}}[n'] \tag{36}$$

with

$$w_{\text{Hann}}[n'] = \begin{cases} \frac{1}{2}(1 - \cos(\frac{2\pi}{M}n')) & \text{if } 0 \le n' < M \\ 0 & \text{else} \end{cases} \tag{37}$$

and that when selecting a different Nyquist window, the number of overlapping samples is chosen such that the sum of the time-shifted Nyquist windows added up to the value 1.

4. Method according to claim 3, **characterized in that** after the windowing, each block is transformed by means of FFT of length M into the frequency domain according to equation (38):

$$R_b[k] = \text{FFT}_M\{r_b^{\text{w}}[n']\} \tag{38}$$

in that the DME interference is suppressed according to equation (39) by zeroing the FFT output values at the points where it was detected, whereby the values are set to zero whose energies exceed a certain value at the output of the FFT:

$$R_b^{\text{IM}}[k] = \begin{cases} R_b[k], & \text{if } R_b[k] < \Theta \cdot \bar{P}[k] \\ 0, & \text{else} \end{cases} \tag{39}$$

in that thereafter, an IFFT according to equation (40) is applied to recover the time signal for each block:

$$r_b^{\text{IM}}[n'] = \text{IFFT}_M\{R_b^{\text{IM}}[k]\} \tag{40}$$

and **in that** the values in the time domain are summed up overlapping:

$$r[n]^{\text{IM}} = \sum_{b=-\infty}^{\infty} r_b^{\text{IM}}[n - b \cdot M/2] \tag{41}$$

such that by the 50% overlap of the blocks when summing up according to equation (41), the predecessor block and the successor block are considered.

5. Receiver for carrying out the method according to claim 1 or 3, **characterized in that** the sampled received signal (r) is fed to a blanking unit (BU) for frequency-selective pulse blanking, which consists of an analysis-filter-bank (AFB) with M subbands, a module for frequency-selective pulse blanking of the subband signals (PBS) and a synthesis-filter-bank (SFB), which reassembles the signal, **in that** for detecting a disturbance in the subbands, the blanking unit (BU) is connected with a detection unit (DU) and for adaptation to disturbances introduced in by pulse blanking the blanking unit (BU) is connected with a blanking mitigation unit (BMU).

6. A receiver according to claim 5, **characterized in that** the blanking mitigation unit (BMU) is connected to an ICI cancellation unit (ICU), that for the classification of symbols, in which a high ICI interference was estimated as unreliable the ICI cancellation unit (ICU) comprises an ICI estimation module, a channel multiplication module (ICM) and a channel coding module (ICE), whereby the output of a DFT module (BDFT) is connected to the blanking mitigation unit (BMU), to the module (IE) of the ICI cancellation unit (ICU), to an SINR estimation (SE) module connected to a channel estimation (CE) module for channel estimation by channel pilot and a equalization module (BE) of the blanking mitigation unit (BMU) for equalization the values supplied after the DFT.

7. A receiver according to claim 6, **characterized in that** to further improve the reception quality and to implement an ICI cancellation an iterative feedback is provided, which reconstructs the presumed transmission signal (SRS) from the last decoding result via a connection cable to the module for channel decoding (CD), module for channel estimation (CE) and module for channel multiplication (ICM), from which the actual interference in the useful signal estimates is estimated by the ICI cancellation unit (ICU)) and uses this estimate to subtract the interference by an OFDM windowing (DFT), the module (IE) of the ICI cancellation unit (ICU) and the adder (A) connected to the blanking equalization module (BE) or, during the SINR estimation, to consider via a connection line (UD) from module (IE) to the module SINR estimation (SE).

**Revendications**

1. Procédé de réduction des interférences de signaux d'interférence en forme d'impulsions dans une transmission de données basée sur OFDM dans un signal de fréquence à porteuses multiples reçu par un récepteur avec des données modulées associées à des fréquences de porteuse individuelles et des signaux d'interférence en forme d'impulsions superposés, dans le quelle:

   a) les signaux de brouillage en forme d'impulsions dans le signal à modulation OFD modulé sont détectés dans le récepteur,
   b) pour la suppression d'un signal d'interférence en forme d'impulsion dans le signal de réception, celui est multiplié par une fonction de fenêtre,
   c) la fonction de fenêtre - considérée dans le domaine temporel comme une fonction continue - pouvant être différenciée,
   d) le signal de transmission multiplié par la fonction de fenêtre est décodé après une estimation de canal de transmission et une égalisation de signal,
   e) dans une estimation de canal de transmission des données, lesquelles associées aux fréquences de porteuse individuelles, une valeur de fiabilité est attribuée, décrivant le degré de crédibilité de les données reçu ou estimé, et
   f) la valeur de fiabilité pour les données, ces luis associées aux fréquences porteuses affectées par un signal d'interférence d'impulsion, est fixée à zéro avant le décodage dans le récepteur,

   **caractérisé en ce qu'un** procédé de suppression d'impulsions du banc de filtres FBPB est fourni, dans lequel:

   - -un signal de réception échantillonné (r) est fourni à une unité de suppression (BU) pour la suppression d'impulsions sélective en fréquence, qui consiste en un groupe de filtres d'analyse (AFB) avec M sous-bandes, un module, connecté avec le groupe de filtres d'analyse (AFB) pour la suppression d'impulsions en sous-bandes sélective en fréquence et une banque de filtres de synthèse (SFB), connecté avec le module, qui réassemble le signal,
   - la banque de filtres d'analyse (AFB), qui divise sélectivement en fréquence le signal de réception (r) en une pluralité de sous-bandes avant un fenêtrage OFDM (DFT), qui est connecté avec la sortie de l'unité de suppression (BU) est utilisée, de telle sorte que le masquage d'impulsion de sous-bande est appliqué à une sélection de sous-bande et ainsi la démodulation OFDM aussi le décodage de canal sont adaptée,
   - la détection d'une perturbation dans une unité de détection (DU), qui est connectée avec la banque de filtres d'analyse (AFB), est effectuée dans les sous-bandes de manière sous-bandes sélective, et
   - une unité d'atténuation de suppression (BMU), connectée avec le module pour la suppression d'impulsions en sous-bandes sélective en fréquence (PBS), pour l'adaptation au brouillage introduit par suppression d'impulsions et une unité d'annulation d'interface ICI de brouillage inter-porteuse (ICU), connectée avec l'unité d'atténuation de suppression (BMU), pour l'élimination le brouillage introduit est obtenu par suppression d'impulsion.

2. Procédé selon la revendication 1, **caractérisé en ce que:**

- le signal de sortie de l'unité d'atténuation de suppression (BMU) est alimenté à un module (CE) pour l'estimation de canal fondé sur des valeurs pilotes,

- est alimenté à un module (IE) de l'unité d'annulation ICI (ICU) pour la classification des symboles dans lequel une perturbation ICI élevée a été estimée comme n'étant pas fiable, et

- est alimenté à un module d'égalisation de suppression (BE) pour l'égalisation des valeurs après le fenêtrage OFDM (DFT).

**3.** Procédé selon le préambule de la revendication 1, **caractérisé en ce qu'**il est prévu un procédé d'atténuation des interférences de fréquence par blocs BBFIM, dans lequel une transformée de Fourier rapide de FFT de longueur M appliquée aux blocs de longueur M dans le domaine temporel, une distance le brouillage DME de l'équipement de mesure a ensuite été supprimé dans le domaine des fréquences et enfin, le signal temporel a été récupéré par une IFFT à transformée de Fourier rapide inverse utilisant une fenêtre à front doux ou une autre fenêtre à front doux de Nyquist et la suppression des interférences dans le domaine des fréquences est réalisée de sorte qu'une analyse spectrale combinée à la suppression d'interférence et à un filtrage variant dans le temps dans le domaine fréquentiel, à condition qu'un signal reçu filtré et échantillonné est divisé en blocs chevauchants d'indice b et de longueur M, le nombre d'échantillons chevauchants en M / 2 étant le suivant:

$$r_b[n'] = r[n' + b \cdot M/2] \tag{35}$$

avec $b \in \{0, 1, 2, . , , \}$ et $n' \in \{0, 1, 2, . , , , M - 1\}$ que les blocs seront ensuite répercutés sur une fenêtre de Hann:

$$r_b^w[n'] = r_b[n'] \cdot w_{\text{Hann}}[n'] \tag{36}$$

avec

$$w_{\text{Hann}}[n'] = \begin{cases} \frac{1}{2}(1 - \cos(\frac{2\pi}{M}n')) & \text{if } 0 \le n' < M \\ 0 & \text{else} \end{cases} \tag{37}$$

et que, lors de la sélection d'une fenêtre de Nyquist différente, le nombre d'échantillons qui se chevauchent est choisi de manière que la somme des fenêtres de Nyquist décalées dans le temps est additionnées à la valeur 1.

**4.** Procédé selon le préambule de la revendication 3, **caractérisé en ce que** après le fenêtrage, chaque bloc est transformé au moyen du format FFT de longueur M dans le domaine fréquentiel, selon l'équation (38):

$$R_b[k] = \text{FFT}_M\{r_b^w[n']\} \tag{38}$$

en ce que la sélectivité en fréquence, analogue à une impulsion, est supprimée, selon l'équation (39), en mettant à zéro les valeurs de sortie de la FFT aux points où l'interférence DME a été détectée, **en ce que** les valeurs sont définies à zéro et dont les énergies dépassent une certaine valeur à la sortie de la FFT:

$$R_b^{\mathrm{IM}}[k] = \begin{cases} R_b[k], & \text{if } R_b[k] < \Theta \cdot \bar{P}[k] \\ 0, & \text{else} \end{cases} \tag{39}$$

en ce que ensuite, un IFFT, selon l'équation (40), est appliqué pour récupérer le signal de temps pour chaque bloc:

$$r_b^{\mathrm{IM}}[n'] = \mathrm{IFFT}_M\{R_b^{\mathrm{IM}}[k]\} \tag{40}$$

et **en ce que** les valeurs du domaine temporel doivent également être additionnées :

$$r[n]^{\mathrm{IM}} = \sum_{b=-\infty}^{\infty} r_b^{\mathrm{IM}}[n - b \cdot M/2] \tag{41}$$

de sorte que par le chevauchement de 50% des blocs dans la sommation selon l'équation (41), le bloc prédécesseur et les blocs successeurs sont pris en compte.

5. Récepteur pour la mise en oeuvre du procédé selon la revendication 1 ou 3, **caractérisé en ce que** le signal reçu échantillonné (r) est envoyé à une unité de suppression (BU) pour la suppression de l'impulsion sélective en fréquence, qui consiste en un groupe de filtres d'analyse (AFB) avec M sous-bandes, un module de suppression de l'impulsion sélective en fonction de la fréquence des signaux de sous-bande (PBS) et un groupe de filtres de synthèse (SFB), qui réassemble le signal, et **en ce que** pour détecter un défaut dans les sous-bandes, l'unité de suppression de bruit (BU) est connectée avec une détection l'unité (DU) et pour l'adaptation aux perturbations introduites par suppression des impulsions l'unité de suppression (BU) est connectée avec une unité d'atténuation de suppression (BMU).

6. Récepteur selon la revendication 5, **caractérisé en ce que** l'unité d'atténuation de suppression (BMU) est connectée à une unité d'annulation ICI (ICU), **en ce que** pour la classification des symboles, dans laquelle une interférence élevée par ICI a été estimée comme non fiable, l'unité d'annulation ICI (ICU) comprend un module d'estimation ICI (IE), un module de multiplication de canaux (ICM) et un module de codage de canaux (ICE), **en ce que** la sortie d'un module DFT (BDFT) est envoyé à l'unité d'atténuation de l'effacement (BMU), à un module ICI (IE) d'unité d'annulation (ICU), à un module d'estimation SINR (SE), celui pour estimation de canal basée sur pilote est connecté à module de canal d'estimation (CE), et un module d'égalisation (BE) d'unité d'atténuation de suppression (BMU) pour l'égalisation les valeurs fournies après la DFT.

7. Récepteur selon la revendication 6, **caractérisé en ce que** pour améliorer encore la qualité de la réception et implémentez une annulation ICI, un retour itératif est utilisé, qui reconstruit le signal de transmission présumé (SRS) à partir du dernier résultat de décodage via un câble de connexion du module de décodage de canal (CD), du module d'estimation de canal (CE) et du module de multiplication de canal (ICM), à partir duquel l'interférence réelle est estimée dans le signal utile avec l'unité d'annulation ICI) et utilise cette estimation pour soustraire le brouillage avec un fenêtrage OFDM (DFT), le module (IE) d'unité d'annulation ICI (ICU) et un additionneur (A) connecté avec le module d'égalisation (BE) ou, dans la trame l'estimation SINR, considérer par un ligne de connexion (UD) entre le module (IE) et le module à estimation SINR (SE).

FIG. 1

Stand der Technik

FIG. 2

Stand der Technik

FIG. 3

Stand der Technik

FIG. 4

SRS → LF → FIM → OM → DFT → CQ → CB → DD → DEC

OM1 → DFT → CQ → CB

EST

Stand der Technik

## FIG. 5

SRS → FSIM → OM → DFT → CQ → DD → DEC

## FIG. 6

$$r[n]$$

Blockbildung

$$r_{b-1}[n']$$

$$r_b[n']$$

$$r_{b+1}[n']$$

Hann Fensterung

$$r_b^{\mathrm{w}}[n']$$

FFT

$$R_b[k]$$

Störreduktion

$$R_b^{\mathrm{IM}}[k]$$

IFFT

$$r_{b-1}^{\mathrm{IM}}[n']$$

$$r_b^{\mathrm{IM}}[n']$$

$$r_{b+1}^{\mathrm{IM}}[n']$$

Addition der Überlappungen

$$r^{\mathrm{IM}}[n]$$

## FIG. 7

FIG. 8

FIG. 9

FIG. 10

FIG. 11

gefiltertes und digitalisiertes Empfangssignal

FIG. 12

FIG. 13

FIG. 14

FIG. 15

FIG. 16

FIG. 17

FIG. 18

FIG. 19

FIG. 20

FIG. 21

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008032913 A1
- DE 102010056087 A1

- US 20140376667 A1


**In der Beschreibung aufgeführte Nicht-Patentliteratur**

- **M. SAJATOVIC ; B. HAINDL ; U. EPPLE ; T. GRÄUPL.** Updated LDACS1 System Specification. *Doc. ref. EWA04-1-T2-D1,* 2011
- **K. KAMMAYER.** Nachrichtenübertragung. Wiesbaden, 2011
- **U. EPPLE ; M. SCHNELL.** Overview of interference situation and mitigation techniques for LDACS1. *Digital Avionics Systems Conference (DASC),* 2011, 4C5-1, 4C5-12
- **S. BRANDES ; S. GLIGOREVIC ; M. EHAMMER ; T. GRÄUPL ; R. DITTRICH.** Expected B-AMC System Performance. *Doc. ref. CIEA15EN506.11,* 2007
- **M. SAJATOVIC ; B. HAINDL ; U. EPPLE ; T. GRÄUPL.** *Updated LDACS1 System Specification*
- **SERGEY V. ZHIDKOV.** Analysis and Comparison of Several Simple Impulsive Noise Mitigation Schemes for OFDM Receivers. *IEEE Transactions of Communications,* Januar 2008, vol. 56 (1), 5-9
- **GRACE XINGXIN GAO.** DME/TACAN Interference and its Mitigation in L5/E5 Bands. *ION Institute of Navigation Global Navigation Satellite Systems Conference,* 2007
- German Aerospace Center (DLR). **M. SCHNELL ; S. BRANDES ; S. GLIGOREVIC.** Interference Mitigation for Broadband L-DACS'', 27th Digital Avionics Systems Conference (DASC). 2008
- German Aerospace Center (DLR), 82234 Wessling. **M. SCHNELL ; S. BRANDES ; S. GLIGOREVIC.** Interference Mitigation for Broadband L-DACS

- **U. EPPLE ; K. SHIBLI ; M. SCHNELL.** Investigation of Blanking Nonlinearity in OFDM Systems. International Conference on Communications (ICC), 2011
- **S. BRANDES ; U. EPPLE ; M. SCHNELL.** Compensation of the Impact of Interference Mitigation by Pulse Blanking on OFDM Systems. *Global Telecommunications Conference (GLOBECOM),* 2009, 1-6
- **U. EPPLE ; D. SHUTIN ; M. SCHNELL.** Mitigation of Impulsive Frequency-Selective Interference in OFDM Based Systems. *IEEE Wireless Communications Letters,* 2012, 484-487
- **M.B. CELEBI ; I. GUVENC ; H. ARSLAN.** Interference Mitigation for LTE Uplink Through Iterative Blanking. *IEEE Global Telecommunications Conference,* 2011, 1-6
- **U. EPPLE ; D. SHUTIN ; M. SCHNELL.** *Mitigation of Impulsive Frequency-Selective Interference in OFDM Based Systems*
- **Q. ZHANG ; Y. ZHENG ; S. WILSON.** Excision of Distance Measuring Equipment Interference from Radio Astronomy Signals. *The astronomic journal,* 2005, 2933-2939
- **Q. ZHANG ; Y. ZHENG ; S. WILSON.** *Excision of Distance Measuring Equipment Interference from Radio Astronomy Signals*
- **U. EPPLE ; D. SHUTIN ; M. SCHNELL.** Mitigation of Impulsive Frequency-Selective Interference in OFDM Based Systems. *IEEE Wireless Communications Letters*
- **K. KAMMEYER ; K. KROSCHEL.** Digitale Signalverarbeitung. Vieweg+Teubner Verlag, 2009